# EUROPÄISCHE PATENTSCHRIFT

(11) **EP 2 190 892 B1**
(45) Veröffentlichungstag und Bekanntmachung des Hinweises auf die Patenterteilung: **27.02.2013**
(21) Anmeldenummer: 08803566.2
(22) Anmeldetag: 03.09.2008
(51) Int. Cl.: C08F 220/18, C08F 220/06, C08F 222/02, C14C 3/22

(54) **COPOLYMERE, WÄSSRIGE FORMULIERUNGEN HIERVON UND VERWENDUNGEN DERSELBEN**
COPOLYMERS, AQUEOUS COMPOSITIONS THEREOF AND USES OF THESE COMPOSITIONS
COPOLYMÈRES, LEURS COMPOSITIONS AQUEUSES ET UTILISATIONS DE CES COMPOSITIONS

(30) Priorität: 04.09.2007 EP 07115644; 10.12.2007 EP 07122718; 15.07.2008 EP 08160380; 27.08.2008 EP 08163075
(43) Veröffentlichungstag der Anmeldung: 02.06.2010
(73) Patentinhaber: BASF SE, 67056 Ludwigshafen (DE)
(72) Erfinder: BRYM, Markus, 68163 Mannheim (DE); RENONCOURT, Audrey, 67059 Ludwigshafen (DE); HÜFFER, Stephan, 67063 Ludwigshafen (DE); WOLF, Gerhard, 68775 Ketsch (DE); MAHN, Ulrike, 68165 Mannheim (DE); BOHRES, Edward, 68161 Mannheim (DE); SCHÖCKER, Petra, 68642 Bürstadt (DE); BELL, Hubertus Peter, 68165 Mannheim (DE); DANISCH, Peter, 67065 Ludwigshafen (DE)
(86) Internationale Anmeldenummer: PCT/EP2008/061595
(87) Internationale Veröffentlichungsnummer: WO 2009/030697

(56) Entgegenhaltungen:
- EP-A- 0 348 565
- EP-A- 1 022 344
- US-A- 3 103 447
- US-A- 3 577 517
- US-A- 4 923 919

## Beschreibung

Die vorliegende Erfindung betrifft Copolymere, erhältlich durch Copolymerisation von folgenden Comonomeren
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem Methacrylat eines α-verzweigten C₃-C₁₀-Alkanols,
(c) mindestens einem Acrylat eines primären β- oder γ- verzweigten C₄-C₂₀-Alkanols.

Weiterhin betrifft die vorliegende Erfindung ein Verfahren zur Herstellung von erfindungsgemäßen Copolymeren, wässrige Formulierungen hiervon und weitere Verwendungen derselben.

Zur Herstellung von Leder können während der Vor-, Haupt- und Nachgerbung Polymere eingesetzt werden. Die Polymeren können dabei unterschiedliche Funktionen erfüllen. So können sie beispielsweise gerbende, nachgerbende, hydrophobierende, fettende oder dispergierende Wirkung zeigen. Die Wahl der Polymeren kann die Eigenschaften des Lederendprodukts beeinflussen. Für die Wahl der Polymeren werden in der Literatur unterschiedliche Vorschläge gemacht.

In EP-A 0 628 085 wird die Verwendung von Copolymeren aus Maleinsäureanhydrid und optional einem zweiten Monomer, beispielsweise Styrol, Isobuten oder Vinylacetat beschrieben, wobei die Copolymeren vor der Verwendung zum Nachgerben und Füllen mit alkoxylierten Alkoholen umgesetzt werden.

In EP 1 087 021 wird die Verwendung von Copolymeren beschrieben, die aus einer hydrophilen Monomer-Komponente wie beispielsweise Acrylsäure, Methacrylsäure, Acrylamid. Methacrylamid oder Maleinsäureanhydrid und einer hydrophoben Monomer-Komponente wie beispielsweise C₈-C₂₂-Alkylacrylat oder C₈-C₂₂-Alkylmethacrylat hergestellt sind und die neutralisiert sind. Die Copolymere werden als Komponente in Polysiloxan-haltigen Lederbehandlungsmitteln eingesetzt Man beobachtet jedoch, dass mit den in EP 1 087 021 berichteten Lederbehandlungsmiteln hergestellte Leder in einigen Fällen diffusionsbedingte Inhomogenitäten in der Fettverteilung und dadurch eine unruhige Färbung aufweisen. Außerdem weisen einige der nach EP 1 087 021 hergestellten Leder eine Tendenz zur Losnarbigkeit bzw. Doppelhäutigkeit auf.

Es bestand die Aufgabe, geeignete Hilfsmittel bereit zu stellen, mit denen Leder hergestellt werden können. Schließlich bestand die Aufgabe, Leder bereit zu stellen, die eine sehr geringe Tendenz zur Bildung von Silikon- bzw. Fettflecken aufweisen.

Dementsprechend wurden die eingangs definierten Copolymere und wässrige Formulierungen gefunden.

Zur Durchführung der Herstellung von Leder unter Verwendung erfindungungsgemäßer Copolymeren oder wässriger Formulierungen geht man üblicherweise von Blößen, Pickelblößen oder Halbzeugen aus.

Zur Durchführung des Verfahrens zur Herstellung von Leder behandelt man Blößen, Pickelblößen oder Halbzeuge mit mindestens einem Copolymer, das erhältlich ist durch vorzugsweise radikalische Copolymerisation von
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid, im Rahmen der vorliegenden Erfindung auch kurz als ethylenisch ungesättigte C₃-C₁₀-Carbonsäure (a) bzw. ethylenisch ungesättigten C₄-C₁₀-Dicarbonsäure (a) oder Anhydrid (a) bezeichnet.
(b) mindestens einem (Meth)acrylat eines α-verzweigten C₃-C₁₀-Alkanols, im Rahmen der vorliegenden Efindung auch kurz als Comonomer (b) bezeichnet,
(c) mindestens einem (Meth)acrylat eines primären β- oder γ- verzweigten C₄-C₂₀-Alkanols, im Rahmen der vorliegenden Erfindung auch kurz als Comonomer (c) bezeichnet.

Vorstehend erwähntes Copolymer (A) wird im Rahmen der vorliegenden Erfindung auch als erfindungsgemäßes Copolymer bezeichnet.

Bei Copolymer (A) kann es sich um Blockcopolymere, Pfropfcopolymere oder vorzugsweise um statistische Copolymere handeln.

Beispiele für ethylenisch ungesättigte C₃-C₁₀-Carbonsäuren (a) sind vorzugsweise α,β-ungesättigte Carbonsäuren wie beispielsweise (E)- oder (Z)-Crotonsäure und insbesondere (Meth)acrylsäure.

Beispiele für ethylenisch ungesättigte C₄-C₁₀-Dicarbonsäuren (a) sind Maleinsäure, Fumarsäure, Itaconsäure, Citraconsäure, Metaconsäure, Methylenmalonsäure, bevorzugt Itaconsäure, Fumarsäure und Maleinsäure und ganz besonders bevorzugt Maleinsäure.

Beispiele für Anhydride (a) sind Maleinsäureanhydrid, Itaconsäureanhydrid, Citraconsäureanhydrid, Methylenmalonsäureanydrid, bevorzugt Itaconsäureanhydrid und Maleinsäureanhydrid und ganz besonders bevorzugt Maleinsäureanhydrid.

In einer Ausführungsform der vorliegenden Erfindung kann Copolymer (A) zwei oder mehr verschiedene ethylenisch ungesättigte C₃-C₁₀-Carbonsäuren (a) oder zwei oder mehr verschiedene ethylenisch ungesättigte C₄-C₁₀-Dicarbonsäuren (a) oder zwei oder mehr verschiedene Anhydride (a) einpolymerisiert enthalten.

In einer Ausführungsform der vorliegenden Erfindung kann Copolymer (A) eine ethylenisch ungesättigte C₃-C₁₀-Carbonsäure (a) und eine ethylenisch ungesättigte C₄-C₁₀-Dicarbonsäure (a) oder ein Anhydrid (a) einpolymerisiert enthalten.

Vorzugsweise enthält Copolymer (A) jedoch nur eine ethylenisch ungesättigte C₃-C₁₀-Carbonsäure (a) oder eine ethylenisch ungesättigte C₄-C₁₀-Dicarbonsäure (a) oder ein Anhydrid (a) einpolymerisiert.

Copolymer (A) enthält weiterhin mindestens ein Comonomer (b) einpolymerisiert. Bei Comonomer (b) handelt es sich um ein (Meth)acrylat eines α-verzweigten C₃-C₁₀-Alkanols. Unter α-verzweigten C₃-C₁₀-Alkanolen werden im Rahmen der vorliegenden Erfindung sekundäre Alkanole mit 3 bis 10 C-Atomen und bevorzugt tertiäre Alkanole mit 4 bis 10 C-Atomen verstanden, die zyklisch oder vorzugsweise nichtzyklisch sein können. Der Begriff Alkanole schließt also Cycloalkanole mit ein. Beispiele für sekundäre Alkanole mit 3 bis 10 C-Atomen sind Isopropanol, sek.-Butanol, sek.-Pentanol (Pentan-2-ol), Pentan-3-ol, Cyclopentanol, Cyclohexanol, sek.-Hexanol (Hexan-2-ol), Hexan-3-ol, sek.-Heptanol (Heptan-2-ol), Heptan-3-ol, sek.-Dekanol und Dekan-3-ol. Bevorzugte Beispiele sind tert.-Butanol und tert.-Amylalkohol.

In einer Variante der vorliegenden Erfindung enthält Copolymer (A) zwei oder mehr verschiedene Comonomere (b) einpolymerisiert.

Bevorzugt ist es jedoch, wenn Copolymer (A) nur ein Comonomer (b) einpolymerisiert enthält.

Besonders bevorzugte Comonomere (b) sind tert.-Amyl(meth)acrylat, tert.-Butylacrylat und insbesondere tert.-Butylmethacrylat.

Copolymer (A) enthält weiterhin mindestens ein Comonomer (c) einpolymerisiert. Bei Comonomer (c) handelt es sich um ein (Meth)acrylat eines primären β- oder γ-verzweigten C₄-C₂₀-Alkanols, bevorzugt eines primären β- oder γ-verzweigten C₆-C₁₈-Alkanols. Bei primären β- oder γ-verzweigten C₄-C₂₀-Alkanolen handelt es sich im Rahmen der vorliegenden Erfindung um verzweigte primäre Alkohole, die eine primäre OH-Gruppe aufweisen. Beispiele für primäre β- oder γ-verzweigten C₄-C₂₀-Alkanole sind Isobutanol Isopentanol, Isohexanol, Isooktanol, Isostearylalkohol und Isopalmitylalkohol. Beispiele für bevorzugte primäre C₆-C₁₈-Alkanole sind 2-Ethylhexylalkohol, 3-n-Propylheptylalkohol, 2-n-Propylheptanol, 3-Isopropylheptylalkohol, Isooktanol, Isostearylalkohol und Isopalmitylalkohol.

In einer Ausführungsform der vorliegenden Erfindung handelt sich bei mindestens einem Comonomer (c) um ein (Meth)acrylat eines primären β- oder γ- (gamma-) verzweigten C₄-C₂₀-Alkohols, ganz besonders bevorzugt sind 2-Ethylhexylalkohol, 2-n-Propylheptanol, 3-n-Propylheptylalkohol und 3-Isopropylheptylalkohol.

In einer Variante der vorliegenden Erfindung enthält Copolymer (A) zwei oder mehr verschiedene Comonomere (c) einpolymerisiert.

Bevorzugt ist es jedoch, wenn Copolymer (A) nur ein Comonomer (c) einpolymerisiert enthält.

In einer Ausführungsform der vorliegenden Erfindung handelt es sich bei Copolymer (A) um ein Copolymer, welches erhältlich ist durch Copolymerisation von
(a) insgesamt 5 bis 30 Gew.-%, bevorzugt 10 bis 25 Gew.-% ethylenisch ungesättigte C₃-C₁₀-Carbonsäure oder ethylenisch ungesättigte C₄-C₁₀-Dicarbonsäure oder ihr Anhydrid,
(b) Insgesamt 5 bis 30 Gew.-%, bevorzugt 10 bis 20 Gew.-°% (Meth)acrylat von α-verzweigtem C₃-C₁₀-Alkanol,
(c) insgesamt 40 bis 90 Gew.-%, bevorzugt 55 bis 80 Gew.-% (Meth)acrylat von primären β- oder γ- verzweigten C₄-C₂₀-Alkanol.

Dabei sind Angaben in Gew.-% auf die Summe aus einpolymerisiertem Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a) bezogen.

In einer bevorzugten Ausführungsform der vorliegenden Erfindung handelt es sich bei mindestens einem Comonomer (b) um ein Methacrylat eines tertiären C₄-C₁₀-Alkanols und bei mindestens einem Comonomer (c) um ein Acrylat eines primären β- oder γ-verzweigten C₄-C₂₀-Alkohols.

In einer Ausführungsform der vorliegenden Erfindung kann Copolymer (A) ein oder mehrere weitere Comonomere (d) einpolymerisiert enthalten. Beispiele für geeignete Comonomere (d) sind Vinylester von C₁-C₁₀-Carbonsäuren, bevorzugt sind Vinylformiat, Vinylpropionat und insbesondere Vinylacetat. Weitere Beispiele für geeignete Comonomere (d) sind Vinylaromaten wie beispielsweise α-Methylstyrol, para-Methylstyrol und insbesondere Styrol. Weitere Beispiele für geeignete Comonomere (d) sind C₆-C₃₀-α-Olefine, beispielsweise 1-Hexen, 1-Octen, 1-Decen, 1-n-C₁₆H₃₂, 1-n-C₁₈H₃₈, 1-Eicosen und 1-n-Docosanol.

In einer Ausführungsform der vorliegenden Erfindung enthält Copolymer (A) insgesamt bis zu 50 Gew.-%, bevorzugt 1 bis 30 Gew.-% weiteres Comonomer (d) einpolymerisiert, bezogen auf die Summe aus Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a).

In einer bevorzugten Ausführungsform der vorliegenden Erfindung enthält Copolymer (A) kein Comonomer (d) einpolymerisiert.

In einer Ausführungsform der vorliegenden Erfindung weist Copolymer (A) bei Zimmertemperatur eine dynamische Viskosität im Bereich von 50 bis 4000 mPa·s, bevorzugt im Bereich von 75 bis 2500 mPa·s auf, bestimmt nach DIN EN ISO 2555 (Brookfield DV-E Viscometer, Spindel Nr. 3 des RV Spindelsatz, 50 upm).

In einer Ausführungsform der vorliegenden Erfindung setzt man im erfindungsgemäßen Verfahren Copolymer (A) als freie Säure ein. In einer weiteren Ausführungsform, bei der man als Comonomer ein Anhydrid (a) gewählt hat, kann man erfindungsgemäßes Comonomer in nicht hydrolysierter Form einsetzen.

Vorzugsweise liegt einpolymerisierte ethylenisch ungesättigte C₃-C₁₀-Carbonsäure (a) bzw. einpolymerisierte ethylenisch ungesättigte C₄-C₁₀-Dicarbonsäure (a) in zumindest partiell neutralisierter Form vor.

In einer anderen bevorzugten Variante der vorliegenden Erfindung liegt einpolymerisiertes Anhydrid von ethylenisch ungesättigter C₄-C₁₀-Dicarbonsäure (a) in zumindest partiell hydrolysierter und gegebenenfalls zumindest partiell neutralisierter Form vor. In einer speziellen Variante kann Copolymer (A) in vollständig neutralisierter Form vorliegen.

Zum Neutralisieren kann man vorzugsweise Hydroxid und/oder Carbonat und/oder Hydrogencarbonat von Alkalimetall oder Erdalkalimetall einsetzen, beispielsweise Natriumhydroxid, Kaliumhydroxid, Natriumcarbonat, Kaliumcarbonat, Natriumhydrogencarbonat, Kaliumhydrogencarbonat, Magnesiumhydroxid, Magnesiumcarbonat, Calciumhydrogencarbonat oder Magnesiumhydrogencarbonat.

Zum Hydrolysieren und gegebenenfalls zumindest partiellern Neutralisieren von Anhydrid (a) kann man vorzugsweise Hydroxid und/oder Carbonat und/oder Hydrogencarbonat von Alkalimetall oder Erdalkalimetall einsetzen. Dabei soll unter "Neutralisieren von Anhydrid (a)" das Neutralisieren der bei der Hydrolyse von einpolymerisiertem Anhydrid (a) entstehenden Carbonsäuregruppen verstanden werden.

Das Verfahren zur Herstellung von Leder unter Verwendung erfindungsgemäßer Copolymeren oder wässriger Formulierungen kann man als Verfahren zum Vorgerben oder Gerben ausüben. Das Gerbverfahren geht aus von nach konventionellen Methoden vorbehandelten Häuten, den sogenannten Blößen, von Tieren wie beispielsweise Rindem, Schweinen, Ziegen oder Hirschen. Dabei ist es für das erfindungsgemäße Verfahren nicht wesentlich, ob die Tiere beispielsweise durch Schlachten getötet oder waidmännisch ariegt wurden oder aber an natürlichen Ursachen verendet sind. Zu den konventionellen Methoden der Vorbehandlung gehören beispielsweise das Äschern, Entkälken, Beizen und Pickeln sowie mechanische Arbeitsschritte, beispielsweise die Entfleischung der Häute.

Das Verfahren kann man in wässriger Flotte ausüben. Geeignete Flottenlängen sind 50 bis 250%.

Zur Durchführung des erfindungsgemäßen Verfahrens kann man beispielsweise 0,1 bis 10 Gew.-% Copolymer (A), bezogen auf das Spaltgewicht der betreffenden Blöße, Pickelblöße oder des betreffenden Halbzeugs, zusetzen.

Das Gerbverfahren übt man im Allgemeinen so aus, dass man ein oder mehrere Copolymere (A) in einer Portion oder in mehreren Portionen unmittelbar vor oder aber während des Gerbungsschrittes zusetzt. Das erfindungsgemäße Gerbverfahren wird vorzugsweise bei einem pH-Wert von 2,5 bis 4 durchgeführt, wobei man häufig beobachtet, dass der pH-Wert während der Durchführung des erfindungsgemäßen Gerbverfahrens um etwa 0,3 bis drei Einheiten ansteigt. Man kann den pH-Wert auch durch Zugabe abstumpfender Mittel um etwa 0,3 bis drei Einheiten erhöhen.

Das Gerbverfahren führt man im Allgemeinen bei Temperaturen von 10 bis 45°C, bevorzugt bei 20 bis 30°C durch. Bewährt hat sich eine Dauer von 10 Minuten bis 12 Stunden, bevorzugt sind eine bis drei Stunden. Das erfindungsgemäße Gerbverfahren kann man in beliebigen gerbereiüblichen Gefäßen durchführen, beispielsweise durch Walken in Fässern oder in gedrehten Trommeln.

In einer Variante des Gerbverfahrens setzt man Copolymer (A) zusammen mit einem oder mehreren herkömmlichen Gerbstoffen ein, beispielsweise mit Chromgerbstoffen, mineralischen Gerbstoffen, Syntanen, Polymergerbstoffen oder vegetabilen Gerbstoffen, wie sie beispielsweise beschrieben sind in Ullmann's Encyclopedia of Industrial Chemistry, Band A15, Seite 259 bis 282 und insbesondere Seite 268 ff., 5. Auflage, (1990), Verlag Chemie Weinheim. Das Gewichtsverhältnis von Copolymer (A) : herkömmlicher Gerbstoff bzw. Summe der herkömmlichen Gerbstoffe beträgt zweckmäßig von 0,01 : 1 bis 100 : 1. In einer vorteilhaften Variante des Verfahrens setzt man nur wenige ppm der herkömmlichen Gerbmittel den oben beschriebenen Copolymeren zu. Besonders vorteilhaft ist es jedoch, auf die Beimischung herkömmlicher Gerbstoffe ganz zu verzichten.

In einer Variante des Gerbverfahrens setzt man Copolymer (A) in einer Portion oder in mehreren Portionen vor oder während des Vorgerbens zu, in einer besonderen Variante bereits im Pickel.

Man kann das Verfahren zur Herstellung von Leder unter Verwendung erfindungsgemäßer Copolymerer oder wässriger Formulierungen vorzugsweise als Verfahren zum Nachgerben von Leder unter der Verwendung von Copolymer (A) durchführen. Das Nachgerbverfahren geht aus von konventionell gegerbten Halbzeugen, d.h. beispielsweise mit Chromgerbstoffen, mineralischen Gerbstoffen, Polymergerbstoffen, Aldehyden, Syntanen oder Harzgerbstoffen gegerbten Halbzeugen. Zur Durchführung des erfindungsgemäßen Nachgerbverfahrens lässt man Copolymer (A) auf Halbzeuge einwirken.

In einer Variante kann man von Halbzeugen ausgehen, die nach dem Gerbverfahren hergestellt worden sind.

Das Nachgerbverfahren kann man unter ansonsten üblichen Bedingungen durchführen. Man wählt zweckmäßig einen oder mehrere, d.h. beispielsweise 2 bis 6 Einwirkschritte und kann zwischen den Einwirkschritten mit Wasser spülen. Die Temperatur bei den einzelnen Einwirkschritten liegt jeweils im Bereich von 5 bis 60°C, bevorzugt 20 bis 45°C. Man setzt zweckmäßig weitere, während der Nachgerbung üblicherweise verwendete Mittel ein, beispielsweise Fettlicker, Nachgerbstoffe auf Basis von Harz- und Vegetabilgerbstoffen. Füllstoffe, Lederfarbstoffe oder Emulgatoren.

Die Leder, die unter Verwendung erfindungsgemäβer Copolymerer oder wässriger Formulierungen zeichnen sich durch eine insgesamt vorteilhafte Qualität aus, beispielsweise sind sie besonders weich und festnarbig. Diese Leder enthalten Copolymer (A) und gegebenenfalls eingesetzten Lederfarbstoff besonders gleichmäßig über den Querschnitt verteilt. Außerdem neigen diese Leder nicht zur Bildung von Fettflecken.

Ein weiterer Aspekt der vorliegenden Erfindung sind wässrige Formulierungen, beispielsweise wässrige Lösungen, Dispersionen oder insbesondere Emulsionen, enthaltend mindestens ein Copolymer (A). Derartige wässrige Formulierungen werden im Rahmen der vorliegenden Erfindung auch kurz als erfindungsgemäße wässrige Formulierungen bezeichnet. Erfindungsgemäße wässrige Formulierungen sind ganz besonders gut geeignet zur Durchführung des erfindungsgemäßen Verfahrens.

In einer Ausführungsform der vorliegenden Erfindung weisen erfindungsgemäße wässrige Formulierungen einen Feststoffgehalt im Bereich von 10 bis 85 %, bevorzugt 20 bis 65 %, besonders bevorzugt mindestens 25 Gew.-% auf.

In einer Ausführungsform der vorliegenden Erfindung weisen erfindungsgemäße wässrige Formulierungen einen pH-Wert im Bereich von 3 bis 10 auf, bevorzugt im Bereich von 4 bis 8.

Ein weiterer Aspekt der vorliegenden Erfindung sind Copolymere (A), im Rahmen der vorliegenden Erfindung auch erfindungsgemäße Copolymere genannt. Erfindungsgemäßes Copolymer ist erhältlich durch Copolymerisation von folgenden Comonomeren:
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem Metacrylat eines α-verzweigten C₃-C₁₀-Alkanols,
(c) mindestens einem Acrylat eines primären β- oder γ-verzweigten C₄-C₂₀-Alkanols.

In einer Ausführungsform der vorliegenden Erfindung handelt es sich bei mindestens einem Comonomer (b) um ein Methacrylat eines tertiären C₄-C₁₀-Alkanols.

In einer Ausführungsform der vorliegenden Erfindung handelt es sich bei mindestens einem Comonomer (c) um ein Acrylat eines primären β- oder γ-verzweigten C₄-C₂₀-Alkohols.

In einer Ausführungsform der vorliegenden Erfindung handelt es sich bei mindestens einem Comonomer (b) um ein Methacrylat eines tertiären C₄-C₁₀-Alkanols und bei mindestens einem Comonomer (c) um ein Acrylat eines primären β- oder γ-verzweigten C₄-C₂₀-Alkohols.

In einer Ausführungsform der vorliegenden Erfindung ist erfindungsgemäßes Copolymer erhältlich durch Copolymerisation von
(a) insgesamt 5 bis 30 Gew.-%, bevorzugt 10 bis 25 Gew.-% ethylenisch ungesättigter C₃-C₁₀-Carbonsäure oder ethylenisch ungesättigter C₄-C₁₀-Dicarbonsäure oder ihr Anhydrid,
(b) insgesamt 5 bis 30 Gew.-%, bevorzugt 10 bis 20 Gew.-% Methacrylat von α-verzweigtem C₃-C₁₀-Alkanol,
(c) insgesamt 40 bis 90 Gew.-%, bevorzugt 55 bis 80 Gew.-% Acrylat von primärem β- oder γ-verzweigten C₄-C₂₀-Alkanol.

Dabei sind Angaben in Gew.-% auf die Summe aus einpolymerisiertem Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a) bezogen.

In einer Ausführungsform der vorliegenden Erfindung kann erfindungsgemäßes Copolymer ein oder mehrere weitere Comonomere (d) einpolymerisiert enthalten. Beispiele für geeignete Comonomere (d) sind Vinylester von C₁-C₁₀-Carbonsäuren, bevorzugt sind Vinylformiat, Vinylpropionat und insbesondere Vinylacetat. Weitere Beispiele für geeignete Comonomere (d) sind Vinylaromaten wie beispielsweise α-Methylstyrol, para-Methylstyrol und insbesondere Styrol. Weitere Beispiele für geeignete Comonomere (d) sind C₆-C₃₀-α-Olefine, beispielsweise 1-Hexen, 1-Octen, 1-Decen, 1-n-C₁₆H₃₂, 1-n-C₁₈H₃₆, 1-Eicosen und 1-n-Docosanol.

In einer Ausführungsform der vorliegenden Erfindung enthält erfindungsgemäßes Copolymer insgesamt bis zu 50 Gew.-%, bevorzugt 1 bis 30 Gew.-% weiteres Comonomer (d) einpolymerisiert, bezogen auf die Summe aus Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a).

In einer bevorzugten Ausführungsform der vorliegenden Erfindung enthält erfindungsgemäßes Copolymer kein Comonomer (d) einpolymerisiert.

In einer Ausführungsform der vorliegende Erfindung weist erfindungsgemäßes Copolymer bei Zimmertemperatur eine dynamische Viskosität im Bereich von 50 bis 4000 mPa·s, bevorzugt Im Bereich von 75 bis 2500 mPa·s auf, bestimmt nach DIN EN ISO 2555.

Bei erfindungsgemäßem Copolymer kann es sich um ein Blockcopolymer, ein Pfropfcopolymer oder vorzugsweise um ein statistisches Copolymer handeln.

In einer Ausführungsform der vorliegenden Erfindung liegt einpolymerisierte ethylenisch ungesättigte C₃-C₁₀-Carbonsäure (a) bzw. einpolymerisierte ethylenisch ungesättigte C₄-C₁₀-Dicarbonsäure (a) in zumindest partiell neutralisierter Form vor.

In einer Ausführungsform der vorliegenden Erfindung liegt einpolymerisiertes Anhydrid von ethylenisch ungesättigter C₄-C₁₀-Dicarbonsäure (a) in zumindest partiell hydrolysierter und gegebenenfalls zumindest partiell neutralisierter Form vor.

Weitere Eigenschaften von Copolymer (A) bzw. erfindungsgemäßem Copolymer sind vorstehend beschrieben.

Erfindungsgemäße Copolymere sind besonders gut geeignet zur Durchführung des erfindungsgemäßen Verfahrens.

Ein weiterer Aspekt der vorliegenden Erfindung ist ein Verfahren zur Herstellung von erfindungsgemäßen Copolymeren, im Rahmen der vorliegenden Erfindung auch als erfindungsgemäßes Herstellungsverfahren bezeichnet. Zur Durchführung des erfindungsgemäßen Herstellungsverfahrens kann man so vorgehen, dass man miteinander radikalisch polymerisiert:
(a) mindestens eine ethylenisch ungesättigte C₃-C₁₀-Carbonsäure oder mindestens eine ethylenisch ungesättigte C₄-C₁₀-Dicarbonsäure oder ihr Anhydrid,
(b) mindestens ein Methacrylat eines α-verzweigten C₃-C₁₀-Alkanols,
(c) mindestens ein Acrylat eines primären β- oder γ-verzweigten C₄-C₂₀-Alkanols.

In einer Ausführungsform der vorliegenden Erfindung geht man so vor, dass man miteinander radikalisch copolymerisiert:
(a) insgesamt 5 bis 30 Gew.-%, bevorzugt 10 bis 25 Gew.-% ethylenisch ungesättigte C₃-C₁₀-Carbonsäure oder ethylenisch ungesättigte C₄-C₁₀-Dicarbonsäure oder ihr Anhydrid,
(b) insgesamt 5 bis 30 Gew.-%, bevorzugt 10 bis 20 Gew.-% Methacrylat von α-verzweigtem C₃-C₁₀-Alkanol,
(c) insgesamt 40 bis 90 Gew.-%, bevorzugt 55 bis 80 Gew.-% Acrylat von primärem β- oder γ-verzweigten C₄-C₂₀-Alkanol.

Dabei sind Angaben in Gew.-% auf die Summe aus einpolymerisiertem Comonomer (b) und Comonomer (c) und ethylenisch ungesättigter C₃-C₁₀-Carbonsäure (a) bzw. ethylenisch ungesättigter C₄-C₁₀-Dicarbonsäure (a) bzw. Anhydrid (a) bezogen.

Zu gegebenenfalls einzupolymerisierendem Comonomer (d) gilt das vorstehend gesagte.

Man kann das erfindungsgemäße Herstellungsverfahren als Lösungspolymerisation oder als Massepolymerisation ausführen. Besonders bevorzugt ist es jedoch, das erfindungsgemäße Herstellungsverfahren als Emulsionspolymerisation auszuführen, in einer speziellen Variante auch als Copolymerisation in Miniemulsion.

Dabei wird im Folgenden auch dann von Emulsionspolymerisation gesprochen, wenn mehrere Comonomere eingesetzt werden. Der Begriff Emulsionspolymerisation umfasst im Folgenden also auch Emulsionscopolymerisationen.

Man kann verschiedene Fahrweisen der Emulsionspolymerisation zur Herstellung von erfindungsgemäßem Copolymer wählen, beispielsweise einen Batch-Prozess (diskontinuierlich) oder semi- oder vollkontinuierliche Verfahren wie Zulaufverfahren.

Dabei kommen auch so genannte Saatfahrweisen in Frage, wie sie beispielsweise in EP 0 810 831 beschrieben sind. Durch Saatfahrweise lassen sich erfindungsgemäße Copolymere mit besonders gut reproduzierbarer Teilchendurchmesserverteilung erzeugen.

Üblicherweise copolymerisiert man unter Verwendung mindestens eines Initiators. Mindestens ein Initiator kann ein Peroxid sein. Beispiele für geeignete Peroxide sind Alkalimetallperoxodisulfate wie z. B. Natriumperoxodisulfat, Ammoniumperoxodisulfat, Wasserstoffperoxid, organische Peroxide wie Diacetylperoxid, Di-tert.-butylperoxid, Diamylperoxid, Dioctanoylperoxid, Didecanoylperoxid, Dilauroylperoxid. Dibenzoylperoxid, Bis-(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, Di-tert.-butylperoxid, tert.-Butylhydroperoxid, Cumolhydroperoxid, tert.-Butylperoxi-2-ethylhexanoat und Diisopropylperoxidicarbamat. Geeignet sind auch Azoverbindungen wie beispielsweise Azobisisobutyronitril, Azobis(2-amidopropan)dihydrochlorid und 2,2'-Azobis(2-methylbutyronitril).

Redoxinitiatoren sind ebenfalls geeignet, beispielsweise aus Peroxiden und oxidierbarer Schwefelverbindung. Ganz besonders bevorzugt sind Systeme aus Acetonbisulfit und organischem Peroxid wie tert,-C₄H₉-OOH, Na₂S₂O₅ (Natriumdisulfit) und organischem Peroxid wie tert.-C₄H₉-OOH oder HO-CH₂SO₂Na und organischem Peroxid wie tert.-C₄H₉-OOH. Auch sind Systeme wie beispielsweise Ascorbinsäure/H₂O₂ besonders bevorzugt.

Ganz besonders gut geeignet sind peroxidische Salze, beispielsweise Alkalimetallsalze von Peroxodisulfat, insbesondere K₂S₂O₈ und Na₂S₂O₈.

Als Polymerisationstemperatur bzw. Temperatur, bei der man das erfindungsgemäße Herstellungsverfahren durchführt, kann man Temperaturen im Bereich von 20 bis 105°C, bevorzugt 55 bis 100°C wählen. Die gewählte Temperatur ist abhängig von der Zerfallscharakteristik des verwendeten Initiators bzw. der verwendeten Initiatoren.

Als Temperatur, bei der man die anschließende Neutralisation durchführt, kann man Temperaturen im Bereich von 10 bis 105°C, bevorzugt 20 bis 50°C wählen.

Die Druckbedingungen sind im Allgemeinen unkritisch, geeignet sind beispielsweise Drücke im Bereich von Normaldruck bis 10 bar.

Man kann mindestens einen Emulgator einsetzen, der anionisch, kationisch oder nichtionisch sein kann.

Gebräuchliche nichtionische Emulgatoren sind z.B. ethoxylierte Mono-, Di- und Tri-Alkylphenole (Ethoxylierungsgrad: 3 bis 50, Alkylrest: C₄-C₁₂) sowie ethoxylierte Fettalkohole (Ethoxylierungsgrad: 3 bis 80; Alkylrest: C₈-C₃₆). Beispiele sind die Lutensol^{®}-Marken der BASF Aktiengesellschaft und die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₆).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorld, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989**.**

Natürlich kann man der Reaktionsmischung weitere Zusatzstoffe beifügen, die in der Emulsionspolymerisation üblich sind, beispielsweise Glykole, Polyethylenglykole, Schutzkolloide und Puffer/pH-Wert-Regulatoren.

Als Zeitdauer für die Emulsionspolymerisation kann man beispielsweise eine Zeltdauer im Bereich von 30 Minuten bis 12 Stunden wählen, bevorzugt sind 2 bis 5 Stunden.

im Anschluss an die eigentliche Copolymerisation kann man desodorieren, beispielsweise durch Zugabe von Initiator, der gleich oder verschieden von dem in der eigentlichen Copolymerisation eingesetzten initiator ist.

In einer Ausführungsform der vorliegenden Erfindung verläuft die Copolymerisation im wesentlichen vollständig. Die Zusammensetzung erfindungsgemäßer Copolymeren unterscheidet sich nicht messbar von der Zusammensetzung der Comonomeren.

In einer Ausführungsform der vorliegenden Erfindung übt man das erfindungsgemäße Verfahren nach Art eines Einstufenverfahrens aus. Dabei sollen unter Elnstufenverfahren im Sinne der vorliegenden Erfindung beispielsweise diskontinuierliche (Batch)-Verfahren verstanden werden und Zulaufverfahren, bei denen ein Anteil der Comonomere vorgelegt werden kann und Anteile der Comonomeren während der Copolymerisation zugefügt werden (Zulauf), wobei die Zusammensetzung des Zulaufs betreffend die Comonomeren während der Copolymerisation im wesentlichen konstant bleibt

In einer anderen Ausführungsform der vorliegenden Erfindung übt man das erfindungsgemäße Verfahren nach Art einer Stufenfahrweise aus. Darunter soll im Sinne der vorliegenden Erfindung Zulaufverfahren, kontinuierlich oder diskontinuierlich, verstanden werden, bei denen man die Zusammensetzung des Zulaufs während der Emulsionspolymerisation ändert.

Durch das erfindungsgemäße Verfahren hergestellte erfindungsgemäße Copolymere fallen Oblicherweise In Form wässriger Dispersionen an, die - wie bereits erwähntebenfalls Gegenstand der vorliegenden Erfindung sind und aus denen sich die erfindungsgemäßen Copolymere durch an sich bekannte Methoden wie beispielsweise Entfernen des Wassers durch beispielsweise Verdampfen oder Filtration isolieren lassen.

Ein weiterer Gegenstand der vorliegenden Erfindung sind wässrige Formulierungen, die neben erfindungsgemäßem Copolymer mindestens eine Silikonverbindung (B) enthalten.

In einer Ausführungsform der vorliegenden Erfindung handelt es sich bei Silikonverbindung (B) um ein Polysiloxan, welches eine oder mehr Carbonsäuregruppen pro Molekül aufweist.

In einer Ausführungsform handelt es sich bei Polysiloxanen, die eine oder mehr Carbonsäuregruppen pro Molekül aufweisen, um solche, die Strukturelemente der Formeln I und II und optional Strukturelemente III a und/oder III b aufweisen.

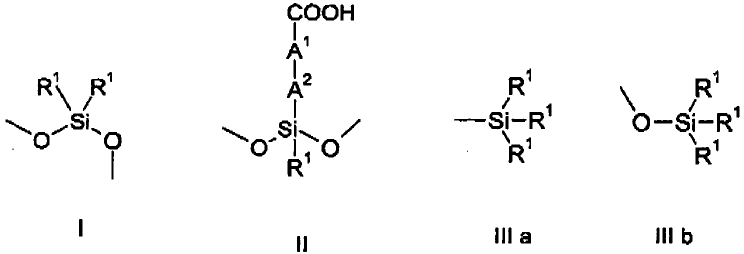

Die oben bezeichneten Strukturelemente sind jeweils so angeordnet, dass Si-O-Si-O-Ketten gebildet werden. Die Bildung von Si-Si-Gruppen ist theoretisch möglich, spielt aber in den meisten Fällen eine untergeordnete Rolle.

In den Formeln I, II, III a und III b sind die Variablen wie folgt definiert:
R¹ ist gleich oder verschieden und unabhängig voneinander
Wasserstoff,
Hydroxyl,
C₁-C₄-Alkyl, wie Methyl, Ethyl, n-Propyl, iso-Propyl, n-Butyl, iso-Butyl, sec.-Butyl und tert.-Butyl; insbesondere Methyl;
C₆₋C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
C₁₋C₄-Alkoxy, wie Methoxy, Ethoxy, n-Propoxy, iso-Propoxy, n-Butoxy, iso-Butoxy, sec.-Butoxy, tert.-Butoxy;
Amino,
Mono-C₁-C₄-Alkylamino, beispielsweise -NHCH₃, -NHC₂H_{5,} -NH(CH₂)₂CH₃,
-NH(CH₂)₃CH₃, -NH-CH(CH₃)₂, NHC(CH₃)₃;
Di-C₁-C₄-Alkylamino, -N(CH₃)₂, -N(C₂H₅)₂, -N(CH₃)(C₂H₅), -N[(CH₂)₂CH₃]₂, -N(CH₃)CH(CH₃)₂,
oder A²-A¹-COOH.

In einer bevorzugten Ausführungsform der vorliegenden Erfindung sind alle R¹ gleich und jeweils Methyl.

In einer anderen bevorzugten Ausführungsform sind die Strukturelemente I jeweils gleich, wobei in I jeweils ein R¹ gleich Methyl und das andere R¹ Phenyl ist.

in einer Ausführungsform der vorliegenden Erfindung sind die Strukturelemente der Formel III a ausgewählt aus den folgenden Gruppen: Si(CH₃)₃, Si(CH₃)₂C₆H₅, Si(CH₃)₂OH, Si(CH₃)C₆H₅OH.

In einer Ausführungsform der vorliegenden Erfindung sind in den Strukturelementen der Formel IIIa bzw. III b. jeweils zwei R¹ gleich und gewählt aus CH₃ und C₆H₅, und das dritte R¹ ist A²-A¹-COOH.

A¹ gleich oder verschieden und lineares oder verzweigtes C₅-C₂₅-Akylen, unsubstituiert oder substituiert mit einem oder mehreren C₁-C₄-Alkyl oder Phenyl, beispielsweise -(CH₂)₅- -(CH₂)₆-, -(CH₂)₇-, -(CH₂)₈-, -(CH₂)₉-, -(CH₂)₁₀-, -(CH₂)₁₁-, -(CH₂)₂-, -(CH₂)₁₃-, -(CH₂)₁₄-, -CH(CH₃)CH₂-CH₂-CH₂-CH(CH₃)-,-C(CH₃)-,-CH₂-CH₂-CH₂-CH(CH₃)-; -CH(C₆H₅)-CH₂-CH₂-CH₂CH(CH₃)-; vorzugsweise -(CH₂)₈-, -(CH₂)₉-, -(CH₂)₁₀-, -(CH₂)₁₁-, -(CH₂)₁₂-, wobei C₅-C₂₅-Alkylen durch 1 bis 8 nicht direkt miteinander verbundene O-Atome unterbrochen sein kann.

A² bedeutet
eine direkte Bindung.
Sauerstoff
Aminogruppe der Formel -NR²-
Carbonylgruppe,
Amidogruppe der Formel -NR²-CO- oder -CO-NR²- oder
Estergruppe der Formel CO-O oder O-CO;
R² ist gleich oder verschieden und unabhängig voneinander gewählt aus
Wasserstoff,
C₁-C₄-Alkyl, wie Methyl, Ethyl, n-Propyl, iso-Propyl, n-Butyl, iso-Butyl, sec.-Butyl und tert.-Butyl.

Polysiloxane, welche die Strukturelemente der allgemeinen Formeln I, II sowie optional III a und/oder III b enthalten, können linear aufgebaut sein oder cyclische oder verzweigte Struktur haben. Verzweigte Polysiloxane, welche die Strukturelemente I, II sowie optional III a und/oder III b enthalten, enthalten im Allgemeinen zusätzlich Strukturelemente beispielsweise der Formel IV a oder IV b

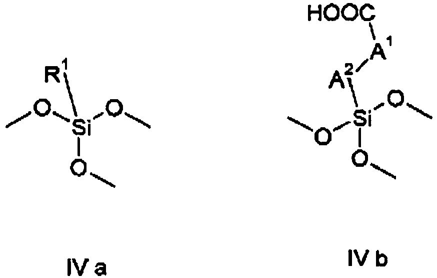

in denen die Variablen wie oben stehend definiert sind. Cyclische unverzweigte Polysiloxane, welche die Strukturelemente der allgemeinen Formel I, II enthalten, enthalten üblicherweise keine Strukturelemente der Formeln III a und III b.

Die Strukturelemente I, II, optional IV a und IV b können alternierend, blockweise und bevorzugt statistisch in Carboxylgruppen-haltigen Polysiloxanmolekülen verteilt sein.

In einer Ausführungsform der vorliegenden Erfindung enthalten Polysiloxane, die eine oder mehr Carbonsäuregruppen pro Molekül aufweisen, im Bereich von 1 bis 50, bevorzugt 2 bis 25, besonders bevorzugt im Mittel 2,5 bis 15 Carboxylgruppen pro Molekül.

In einer Ausführungsform der vorliegenden Erfindung liegt das Molekulargewicht M_{w} von Polysiloxanen, die eine oder mehr Carbonsäuregruppen pro Molekül aufweisen, im Bereich von 5000 g bis 150.000 g/mol, bevorzugt 10000 bis 100.000 g/mol.

Die Molekulargewichtsbestimmung kann durch dem Fachmann bekannte Methoden durchgeführt werden, beispielsweise durch Lichtstreuungsmethoden oder Viskositätsbestimmungen.

In einer Ausführungsform der vorliegenden Erfindung sind alle oder zumindest ein gewisser Anteil, beispielsweise ein Drittel oder die Hälfte, der Carbonsäuregruppen in den Polysiloxanen, die eine oder mehr Carbonsäuregruppen pro Molekül aufweisen, neutralisiert. Zum Neutralisieren eignen sich beispielsweise basische Salze wie Hydroxide oder Carbonate der Alkalimetalle wie beispielsweise Na oder K. Zum Neutralisieren eignen sich weiterhin Ammoniak, Alkylamine wie beispielsweise Methylamin, Dimethylamin, Trimethylamin, Ethylamin, Diethylamin, Triethylamin, Ethylendiamin, Alkanolamine wie beispielsweise Ethanolamin, Diethanolamin, Triethanolamin, N-MethylEthanolamin, N-Methyldiethanolamin oder N-(n-Butyl)-diethanolamin.

Eine andere Art von geeigneten Silikonverbindungen (B) sind Polysiloxane, die keine Carbonsäuregruppen aufweisen. Derartige Polysiloxane, die im Rahmen der vorliegenden Erfindung auch als Carbonsäuregruppen-freie Polysiloxane bezeichnet werden, enthalten im allgemeinen Strukturelemente der oben bezeichneten Formeln I, optional III a, III b und IV a, wobei die Variablen wie oben stehend definiert sind. Bevorzugt sind erfindungsgemäß eingesetzte Carbonsäuregruppen-freie Polysiloxane aus Strukturelementen der oben bezeichneten Formeln I, optional III a, III b und IV a aufgebaut.

Besonders bevorzugt eingesetzte Carbonsäuregruppen-freie Polysiloxane sind Poly(dimethyl)siloxane und Poly(phenylmethyl)siloxane.

Carbonsäuregruppen-freie Polysiloxane, welche die Strukturelemente der allgemeinen Formeln I sowie optional III a, III b und IV a enthalten, können linear aufgebaut sein oder cyclische oder verzweigte Struktur haben. Verzweigte Carbonsäuregruppen-freie Polysiloxane, welche die Strukturelemente I sowie optional III a und/oder III b enthalten, enthalten im Allgemeinen zusätzlich Strukturelemente beispielsweise der Formel IV a. Cyclische unverzweigte Carbonsäuregruppen-freie Polysiloxane, welche die Strukturelemente der allgemeinen Formel I enthalten, enthalten üblicherweise keine Strukturelemente der Formeln III a und III b.

In einer bevorzugten Ausführungsform der vorliegenden Erfindung sind alle R¹ in Carbonsäuregruppen-freien Polysiloxanen gleich und jeweils Methyl.

In einer anderen bevorzugten Ausführungsform sind die Strukturelemente I in Carbonsäuregruppen-freien Polysiloxanen jeweils gleich, wobei in I jeweils ein R¹ gleich Methyl und das andere R¹ Phenyl ist.

In einer Ausführungsform der vorliegenden Erfindung sind die Strukturelemente der Formel III a in Carbonsäuregruppen-freien Polysiloxanen ausgewählt aus den folgenden Gruppen: Si(CH₃)₃, Si(CH₃)₂C₆H₅, Si(CH₃)₂OH, Sl(CH₃)C₆H₅OH.

Üblicherweise liegt das Molekulargewicht M_{w} der erfindungsgemäß eingesetzten Carboxylgruppen-freien Polysiloxane mit den Strukturelementen I, II, optional III a, III b und IV a im Bereich von 500 g bis 150.000 g/mol, bevorzugt bis 10.000 g/mol.

In einer Ausführungsform der vorliegenden Erfindung enthalten erfindungsgemäße Formulierungen 0,1 bis 30 Gew.-%, bevorzugt 0,5 bis 15 Gew.-% an Silikonverbindung (B), insbesondere mindestens 1 Gew.-%.

In einer speziellen Ausführungsform der vorliegenden Erfindung enthalten erfindungsgemäße Formulierungen 1 bis 20 Gew.-%, bevorzugt 2 bis 10 Ges.-% an Polysiloxan, das eine oder mehrere Carbonsäuregruppen pro Molekül aufweist.

Erfindungsgemäße wässrige Formulierungen können einen oder mehrere Emulgatoren (C) enthalten, beispielsweise 0,5 bis 25 Gew.-%, bevorzugt 1 bis 10 Gew.-% eines oder mehrerer Emulgatoren (C), bezogen auf erfindungsgemäße wässrige Formulierung.

Als Emulgatoren können im Prinzip alle in wässrigen Systemen oberflächenaktiven Verbindungen eingesetzt werden, die nichtionischer, anionischer, kationischer oder auch zwitterionischer Natur sein können.

Besonders gut geeignete Emulgatoren sind N-acylierte Aminosäurederivate beispielsweise der Formel V 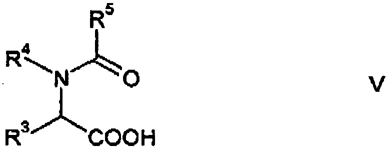 in denen die Variablen wie folgt definiert sind:
R3 Wasserstoff,
C₁-C₄-Alkyl, wie Methyl, Ethyl, n-Propyl, iso-Propyl, n-Butyl, iso-Butyl, sec.-Butyl und tert.-Butyl, insbesondere Methyl;
C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
R⁴ C₁-C₄-Alkyl, wie Methyl, Ethyl, n-Propyl, iso-Propyl, n-Butyl, iso-Butyl, sec.-Butyl und tert.-Butyl, insbesondere Methyl;
Die Gruppe CO-R⁵ ist üblicherweise von gesättigten oder ungesättigten Fettsäuren abgeleitet. Unter gesättigten Fettsäuren sind Carbonsäuren mit C₉-C₂₀-Alkyl-gruppen zu verstehen, die linear oder verzweigt sein können, substituiert oder unsubstituiert. R⁵ kann beispielsweise sein: n-Nonyl, n-Decyl, n-Dodecyl, n-Tetradecyl, n-Pentadecyl, n-Octadecyl, n-Eicosyl.

CO-R⁵ kann von einer ungesättigten Fettsäure mit 9 bis 20 C-Atomen und einer bis 5 C-C-Doppelbindungen abgeleitet sein, wobei die C-C-Doppelbindungen beispielsweise isoliert oder allylisch sein können, beispielsweise der Acylrest der Linolsäure, der Linolensäure, und ganz besonders bevorzugt der Ölsäure.

In einer Ausführungsform der vorliegenden Erfindung sind alle oder zumindest ein gewisser Anteil, beispielsweise ein Drittel oder die Hälfte, der Carboxylgruppen in als Emulgatoren eingesetzten N-acylierten Aminosäurederivaten neutralisiert. Zur Neutralisation eignen sich beispielsweise basische Salze wie Hydroxide oder Carbonate der Alkalimetalle wie beispielsweise Na oder K. Zur Neutralisation eignen sich weiterhin Ammoniak, Alkylamine wie beispielsweise Methylamin, Dimethylamin, Trimethylamin, Ethylamin, Diethylamin, Triethylamin, Ethylendiamin, und ganz besonders Alkanolamine wie beispielsweise Ethanolamin, Diethanolamin, Triethanolamin, N-MethylEthanolamin, N-Methyldiethanolamin oder N-(n-Butyl)-diethanolamin.

Als beispielhafte Vertreter für Verbindungen der Formel V seien N-Oleylsarcosin, N-Stearylsarcosin, N-Lauroylsarcosin und N-Isononanoylsarcosin sowie die jeweiligen Natriumsalze, Ethanolammoniumsalze. Diethanolammoniumsalze sowie N-Methyldiethanolammoniumsalze genannt.

Weitere besonders gut geeignete Emulgatoren (C) sind organische Sulfite, insbesondere solche der allgemeinen Formel VI. 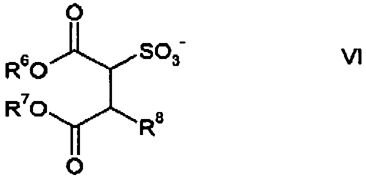 in denen die Variablen wie folgt definiert sind:
R⁶, R⁷ gleich oder vorzugsweise verschieden und gewählt aus Wasserstoff,
C₁-C₃₀-Alkyl, verzweigt oder unverzweigt, wie Methyl, Ethyl, n-Propyl, iso-Propyl, n-Butyl, iso-Butyl, sec.-Butyl, tert.-Butyl, n-Pentyl. iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Undecyl, n-Dodecyl, n-Tridecyl, n-Tetradecyl, n-Hexadecyl, n-Octadecyl, n-Eicosyl, bevorzugt in β-Stellung verzweigte Reste der Formel VI a 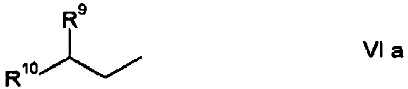 (CH₂CH₂O)ₓ-O-R¹¹ oder [CH(CH₃)CH₂O)ₓ-O-R¹¹, wobei x eine ganze Zahl im Bereich von 1 bis 20 ist,
C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
R⁸ ist gewählt aus C₁-C₄-Alkyl wie Methyl, Ethyl, n-Propyl, iso-Propyl, n-Butyl, iso-Butyl, sec.-Butyl, tert.-Butyl und insbesondere Wasserstoff;
R⁹, R¹⁰ gleich oder vorzugsweise verschieden und gewählt aus C₁-C₂₇-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Undecyl, n-Dodecyl, n-Tridecyl, n-Tetradecyl, n-Hexadecyl, n-Octadecyl, n-Eicosyl;
wobei die Summe der C-Atome von R⁹ und R¹⁰ maximal 30 beträgt. Vorzugsweise hat R⁹ zwei C-Atome mehr als R¹⁰; besonders bevorzugt sind beispielsweise die Kombinationen
R⁹ = n-Undecyl und R¹⁰ = n-Nonyl,
R⁹ = n-Dodecyl und R¹⁰ = n-Decyl,
R⁹ n-Tridecyl und R¹⁰ = n-Undecyl,
R⁹ = n-Tetradecyl und R¹⁰ = n-Dodecyl.
R⁹ = n-Pentadecyl und R¹⁰ = n-Tridecyl.
R¹¹ ist gewählt aus C₁-C₄-Alkyl wie Methyl, Ethyl, n-Propyl, iso-Propyl, n-Butyl, iso-Butyl, sec.-Butyl, tert.-Butyl, Phenyl, ortho-Totyl, meta-Tolyl, para-Tolyl und insbesondere Wasserstoff

In einer bevorzugten Ausführungsform der vorliegenden Erfindung ist genau einer der Reste R⁶ und R⁷ Wasserstoff und der andere Rest gewählt aus C₁C₃₀-Akyl.

In einer besonders bevorzugten Ausführungsform der vorliegenden Erfindung wählt man als Emulgator (C) ein Gemisch von mehreren Verbindungen der Formel VI, die sich beispielsweise dadurch unterscheiden können, dass in der ersten Verbindung der Formel VI R⁶ gleich Wasserstoff und R⁷ aus C₁-C₃₀-Alkyl gewählt wird und in der zweiten R⁷ gleich Wasserstoff und R⁶ aus C₁-C₃₀-Alkyl gewählt wird.

In einer Ausführungsform der vorliegenden Erfindung sind alle oder zumindest ein gewisser Anteil, beispielsweise ein Drittel oder die Hälfte, der Sulfonylgruppen in als Emulgatoren (C) eingesetzten Verbindungen der allgemeinen Formel VI neutralisiert. Zur Neutralisation eignen sich beispielsweise basische Salze wie Hydroxide oder Carbonate der Alkalimetalle wie beispielsweise Na oder K. Zum Neutralisieren eignen sich weiterhin Ammoniak, Alkylamine wie beispielsweise Methylamin, Dimethylamin, Trimethylamin, Ethylamin, Diethylamin, Triethylamin, Ethylendiamin, und ganz besonders Alkanolamine wie beispielsweise Ethanolamin, Diethanolamin, Triethanolamin, N-Methyl-Ethanolamin, N-Methyldiethanolamin oder N-(n-Butyl)-diethanolamin.

Die Herstellung von Verbindungen der Formel VI ist an sich bekannt und in WO 01/68584 beschrieben. Sie gelingt beispielsweise durch einfache oder doppelte Veresterung von Dicarbonsäureanhydriden der allgemeinen Formel VII 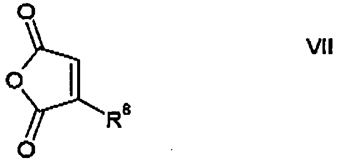 mit entsprechenden Alkoholen, die nicht rein vorliegen müssen, gefolgt von einer Umsetzung mit Disulfid.

Man kann anstatt einer reinen Verbindung der Formel VI Gemische von verschiedenen Schwefel-haltigen Verbindungen als Emulgator verwenden. Beispielsweise ist es möglich, zur Veresterung das als Oxoöl 135 oder Oxodicköl 135 (WO 01 /68584) bekannte Gemisch einzusetzen.

In einer Ausführungsform der vorliegenden Erfindung können im erfindungsgemäßen Verfahren eingesetzte Formulierungen bis zu 40 Gew.-%, bevorzugt bis zu 20 Gew.-%, bezogen auf Formulierung, mindestens eines Alkohols der Formel VIII 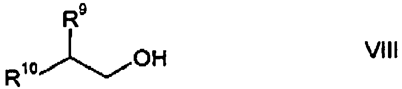 enthalten, wobei in Formel VIII die Variablen R⁹ und R¹⁰ wie oben stehend definiert sind.

In einer Ausführungsform der vorliegenden Erfindung können im erfindungsgemäßen Verfahren eingesetzte Formulierungen bis zu 50 Gew.-%, bevorzugt bis zu 30 Gew.-%, bezogen auf Formulierung, mindestens einer Verbindung der Formel VIII enthalten.

In einer bevorzugten Ausführungsform der vorliegenden Erfindung können im erfindungsgemäßen Verfahren eingesetzte Formulierungen bis zu 40 Gew.%, besonders bevorzugt bis zu 20 Gew.-% Mischungen enthalten, die mindestens einen Alkohol der allgemeinen Formel VIII umfassen; beispielhaft für derartige Mischungen sei Oxoöl 135 und Oxoöl 13 genannt.

Weitere besonders gut geeignete Emulgatoren (C) sind Phosphate alkoxylierter und insbesondere ethoxylierter Alkanole (Alkylrest C₁₂-C₃₀, bevorzugt C₁₆-C₂₀, Alkoxylierungsgrad, bevorzugt Ethoxylierungsgrad 2 bis 10, bevorzugt 3 bis 5) und Phosphate ylkoxylierter und insbesondere ethoxylierter Alkenole (Alkenylrest C₁₂₋C₃₀, bevorzugt C₁₄-C₂₀, mit ein bis drei C-C-Doppelbindungen, Alkoxylierungsgrad, bevorzugt Ethoxylierungsgrad 2 bis 10, bevorzugt 3 bis 5). Phosphate alkoxylierter und insbesondere ethoxylierter Alkanole bzw. Alkenole können partiell oder vollständig neutralisiert sein, beispielsweise mit basischer Alkalimetallverbindung, insbesondere mit Kaliumhydroxid oder Natriumhydroxid.

Bevorzugte Beispiele für C₁₂C₃₀-Alkyl sind n-C₁₂-C₃₀-Akyl, insbesondere Lauryl (n-C₁₂H₂₅), Myristyl (n-C₁₄H₂₉), Palmityl (n-C₁₆H₃₃) und Stearyl (n-C₁₈H₃₇). Bevorzugte Beispiele für C₁₂-C₃₀-Alkenyl sind cis-Octadec-9-enyl, cis,cis-Octadeca-9,12-dienyl und all-cis-Octadeca-9,12,15-trienyl.

In einer Ausführungsform der vorliegenden Erfindung enthält erfindungsgemäße wässrige Formulierung mindestens eine weitere hydrophobe Verbindung (D). Bei mindestens einer hydrophoben Verbindung (D) handelt es sich dabei um eine Verbindung auf Kohlenstoffbasis, beispielsweise natürliches oder vorzugsweise synthetisches Wachs, natives oder vorzugsweise synthetisches Öl oder natives oder vorzugsweise synthetisches Fett.

Als Beispiele für natürliche Wachse seien Bienenwachs, Korkwachs, Montanwachse oder Carnaubawachs genannt.

Als Beispiele für synthetische Wachse seien Polyethylenwachse oder Ethylencopolymerwachse genannt, wie sie beispielsweise durch radikalische Polymerisation von Ethylen oder radikalische Copolymerisation von Ethylen mit beispielsweise (Meth)acrylsäure oder durch Ziegler-Natta-Katalyse erhältlich sind. Weiterhin seien Polyisobutylenwachse genannt. Weiterhin seien Paraffingemische genannt; darunter sind Gemische von Kohlenwasserstoffen zu verstehen, die 12 oder mehr Kohlenstoffatome aufweisen und üblicherweise einen Schmelzpunkt im Bereich von 25 bis 45 °C aufweisen. Derartige Paraffingemische können beispielsweise in Raffinerien oder Crackern anfallen und sind dem Fachmann als Paraffingatsch und Sasolwachse bekannt. Ein weiteres Beispiel für synthetische Wachse sind Montanesterwachse.

Als Beispiele für natürliche Öle seien bei Zimmertemperatur flüssige Triglyceride genannt, beispielsweise Fischöl, Rinderklauenöl, Olivenöl, Baumwollsamenöl. Rizinusöl, Sonnenblumenöl und Erdnussöl genannt.

Als Beispiele für synthetische Öle seien Weißöl, Paraffinöl, tunktionalisierte Paraffine wie beispielsweise chlorierte oder sulfochlorierte Paraffine oder auch Polyalkylenglykole wie beispielsweise Polyethylenglykol genannt.

Als Beispiele für natürliche Fette seien bei Zimmertemperatur feste native Triglyceride genannt wie beispielsweise Lanolin, Schellackwachs sowie deren Gemische.

Erfindungsgemäß kann man etwa 10 bis 70, bevorzugt 20 bis 40 Gew.-% einer oder mehrerer weiterer hydrophober Verbindung(en) (D), bezogen auf die Formulierung, einsetzen.

In einer Ausführungsform der vorliegenden Erfindung enthält erfindungsgemäße wässrige Formulierung
im Bereich von 1 bis 80 Gew.-%, bevorzugt 5 bis 60 Gew.-% Copolymer (A),
im Bereich von 0,1 bis 30 Gew.-%, bevorzugt 0,5 bis 15 Gew.-% Silikonverbindung (B), insbesondere mindestens 1 Gew.-%,
im Bereich von 0,5 bis 25 Gew.-%, bevorzugt 1 bis 10 Gew.-% Emulgator (C),
im Bereich von insgesamt 10 bis 70, bevorzugt 20 bis 40 Gew.-% weitere hydrophobe Verbindung(en) (D).
wobei Angaben in Gew.-% jeweils auf gesamte erfindungsgemäße wässrige Formulierung bezogen sind.

Erfindungsgemäße wässrige Formulierungen sind besonders gut zur Herstellung von Leder geeignet. Mit Hilfe von erfindungsgemäßen wässrigen Formulierungen hergestelltes Leder zeichnet sich durch insgesamt vorteilhafte anwendungstechnische Eigenschaften, insbesondere eine besonders geringe Neigung zur Bildung von diffusionsbedingten Inhomogenitäten in der Fettverteilung. Die Färbung von erfindungsgemäßen Ledern ist besonders gleichmäßig. Weiterhin zeigen sie keine messbare Tendenz zur Losnarbigkeit bzw. Doppelhäutigkeit.

Ein weiterer Gegenstand der vorliegenden Erfindung ist ein Verfahren zur Herstellung der erfindungsgemäßen wässrigen Formulierungen, im Folgenden auch erfindungsgemäßes Herstellverfahren genannt. Das erfindungsgemäße Herstellverfahren lässt sich im Allgemeinen so durchführen, dass man die Komponenten Copolymer (A), Silikonverbindung (B), gegebenenfalls Emulgator(en) (C) sowie gegebenenfalls weitere hydrophobe Verbindung(en) (D) sowie gegebenenfalls Alkohol der Formel VIII miteinander mischt. Die Reihenfolge der Zugabe der einzelnen Komponenten ist in der Regel nicht kritisch. Das Mischen kann beispielsweise durch einfaches Verrühren der Komponenten geschehen, beispielsweise mit einem Mixer oder einem Ultra-Turrax-Rührer. In einigen Fällen erfolgt eine weitere Homogenisierung, z.B. mit einem Spalthomogenisator. Besonders lagerstabile erfindungsgemäße Formulierungen erhält man, wenn man mindestens eine weitere Homogenisierung durchführt.

Ein weiterer Gegenstand der vorliegenden Erfindung ist die Verwendung von erfindungsgemäßen Copolymeren zur Herstellung von wässrigen Formulierungen, gewählt aus Emulsionen oder Dispersionen, von Silikonverbindungen (B). Ein weiterer Gegenstand der vorliegenden Erfindung ist ein Verfahren zur Herstellung von wässrigen Formullerungen, gewählt aus Emulsionen oder Dispersionen, von Silikonverbindungen (B) unter Verwendung von erfindungsgemäßen Copolymeren.

Erfindungsgemäße Formulierungen können Emulgator enthalten. Beispiele für geeignete Emulgatoren sind vorstehend aufgeführt.

In einer Variante der vorliegenden Erfindung setzt man zur Durchführung des vorstehend genannten erfindungsgemäßen Verfahrens bis maximal 2 Gew.-% weiteren Emulgator, bezogen auf gesamte wässrige Emulsion bzw. Dispersion, einsetzt. In einer anderen Variante setzt man keinen Emulgator ein.

Ein weiterer Gegenstand der vorliegenden Erfindung sind wässrige Formulierungen, gewählt aus Emulsionen und Dispersionen, enthaltend mindestens ein erfindungsgemäßes Copolymer und
(B) mindestens eine Silikonverbindung.
Erfindungsgemäßes Copolymer lässt sich also als Emulgator (Kompatibilisator) für verschiedenste lipophile Substanzen einsetzen, insbesondere für Silikonverbindungen (B).

Silikonverbindung (B) kann Carboxylgruppen tragen. In einer anderen Variante trägt Silikonverbindung (B) keine Carboxylgruppen

In einer Ausführungsform der vorliegenden Erfindung handelt es sich bei Silikonverbindung (B) um ein Silikon, das bei Zimmertemperatur flüssig ist.

Die erfindungsgemäßen wässrigen Formulierungen, insbesondere Dispersionen oder Emulsionen, lassen sich vorteilhaft zur Herstellung von faserigen Substraten, als Trennmittel, als Reinigungsmittel, als Schmiermittel, zur Be- oder Verarbeitung von Baumaterialien oder in kosmetischen Zubereitungen verwenden. Ein weiterer Gegenstand der vorliegenden Erfindung ist die Verwendung von erfindungsgemäßen wässrigen Formulierungen, gewählt aus Emulsionen und Dispersionen, zur Herstellung von faserigen Substraten, als Trennmittel, als Reinigungsmittel, als Schmiermittel, zur Be- oder Verarbeitung von Baumaterialien oder in kosmetischen Zubereitungen.

In einer Ausführungsform der vorliegenden Erfindung wählt man faserige Substrate aus Leder, Papier, Holz, Textil und Pappe.

Wünscht man erfindungsgemäße wässrige Formulierungen, gewählt aus Emulsionen und Dispersionen als Reinigungsmittel bzw. zur Reinigung von Oberflächen zu verwenden, so kann man von beliebigen Oberflächen ausgehen, beispielsweise Leder, Kunststoff, Gummi bzw. Kautschuk. Man kann beispielsweise so vorgehen, dass man erfindungsgemäße wässrige Formulierungen, gewählt aus Emulsionen und Dispersionen, aufträgt, beispielsweise mit einem Reinigungsmittel wie z.B. Watte, einem Schwamm, Papiertuch, Lappen oder Tuch oder mittels einer Sprühvorrichtung, beispielsweise einer Spraydose, danach einwirken lässt, beispielsweise im Bereich von 10 Sekunden bis einen Tag, und dann überstehende erfindungsgemäße Emulsion bzw. Dispersion entfernt, beispielsweise mit einem Reinigungsmittel wie z.B. Watte, einem Schwamm, Papiertuch, Lappen oder Tuch. Man erhält glänzende, saubere Oberflächen.

Wünscht man erfindungsgemäße wässrige Formulierungen, gewählt aus Emulsionen und Dispersionen, zu Be- oder Verarbeitung von Baumaterialien zu verwenden, so ist die Hydrophobierung von Gips, Stein, Klinker und Beton bevorzugt. Dazu bringt man erfindungsgemäße Dispersion bzw. Emulsion entweder in Betonrohmasse ein oder trägt sie nachträglich auf das betreffende Baumaterial auf, beispielsweise durch Bestreichen, Besprühen oder Tränken und anschließendes Trocknen lassen.

Wünscht man erfindungsgemäße wässrige Formulierung, gewählt aus Emulsionen und Dispersionen, als oder in kosmetischen Zubereitungen zu verwenden, so sind Salben, Cremes, Seifen, Lotionen, Shampoos und Haarpflegemittel, Wasch-, Dusch- und Badepräparate bevorzugt. Ein weiterer Gegenstand der vorliegenden Erfindung sind kosmetische Zubereitungen, hergestellt unter Verwendung von mindestens einer erfindungsgemäßen wässrigen Formulierung, gewählt aus Emulsionen und Dispersionen. Erfindungsgemäße kosmetische Zubereitungen enthalten erfindungsgemäße Emulsion bzw. Dispersion.

Erfindungsgemäße kosmetische Zubereitungen können neben Wasser und erfindungsgemäßer Dispersion oder Emulsion eine Öl- oder Fettphase (E) enthalten. Die Öl- oder Fettphase (E) kann beispielsweise durch ein oder mehrere natürliche oder synthetische Öl, Fette oder Wachse gebildet werden.

In einer Ausführungsform der vorliegenden Erfindung setzt sich die Öl- oder Fettphase (E) aus einem oder vorzugsweise mehreren Bestandteilen zusammen, die im Folgenden aufgeführt sind.

Bestandteile der Öl- und/oder Fettphase (E) kann man beispielsweise wählen aus der Gruppe der Lecithine und der Fettsäuretriglyceride, z. B. der Triglycerinester gesättigter und/oder ungesättigter, verzweigter und/oder unverzweigter Alkancarbonsäuren einer Kettenlänge von 8 bis 24, insbesondere 12 bis 18 C-Atomen. Fettsauretriglyceride können beispielsweise vorteilhaft gewählt werden aus der Gruppe der synthetischen, halbsynthetischen und natürlichen Öle, wie z.B. Olivenöl, Sonnenblumenöl, Sojaöl, Erdnussöl, Rapsöl, Mandelöl, Palmöl, Kokosöl, Rizinusöl, Weizenkeimöl, Traubenkemöl, Distelöl, Nachtkerzenöl und Macadamianussöl.

Weitere Bestandteile der Öl- und/oder Fettphase (E) können gewählt werden aus der Gruppe der Ester aus gesättigten und/oder ungesättigten, verzweigten und/oder unverzweigten Alkancarbonsäuren einer Kettenlänge von 3 bis 30 C-Atomen und gesättigten und/oder ungesättigten, verzweigten und/oder unverzweigten Alkoholen einer Kettenlänge von 3 bis 30 C-Atomen sowie aus der Gruppe der Ester aus aromatischen Carbonsäuren und gesättigten und/oder ungesättigten, verzweigten und/oder unverzweigten Alkoholen einer Kettenlänge von 3 bis 30 C-Atomen. Bevorzugte Beispiele sind Isopropylmyristat, Isopropylpalmitat, isopropylstearat, lsopropyloleat, n-Butylstearat, n-Hexyllaurat, n-Decyloleat, Isooctylstearat, Isononylstearat, lsononytisononanoat, 2-Ethylhexylpalmitat, 2-Ethylhexyllaurat, 2-Hexyldecylstearat, 2-Octyldodecylpalmitat, Oleyloleat, Oleylerucat, Erucyloleat, Erucylerucat Dicaprylyl Carbonat (Cetiol CC) und Cocoglyceride (beispielsweise Myritol 331), Butylenglykoldicaprylat/Dicaprat und Di-n-butyladipat sowie synthetische, halbsynthetische und natürliche Gemische solcher Ester, wie z.B. Jojobaöl.

Weitere Bestandteile der Öl- oder Fettphase (E) können gewählt werden aus der Gruppe der verzweigten und unverzweigten Kohlenwasserstoffe und -wachse, der Di-C₅-C₂₀-alkylether, der Gruppe der gesättigten oder ungesättigten, verzweigten oder unverzweigten C₁₂-C₃₀-Alkohole, die auch Schaumbildnerfunktion übernehmen können.

Auch beliebige Abmischungen vorstehend genannter Bestandteile kann man als Öl- oder Fettphase (E) in erfindungsgemäßen kosmetischen Zubereitungen einsetzen.

Es kann vorteilhaft sein, Wachse, beispielsweise Cetylpalmitat, als alleinige Lipidkomponente der Öl- oder Fettphase (E) einzusetzen.

Bevorzugte Bestandteile der Öl- oder Fettphase (E) sind gewählt aus der Gruppe 2-Ethylhexylisostearat, Octyldodecanol, Isotridecylisononanoat, Isoeicosan, 2-Ethylhexylcocoat, C₁₂-C₁₅-Alkylbenzoat, Capryl-Caprinsäure-triglycerid, Dicaprylylether.

Beispiele für bevorzugte Abmischungen von Bestandteilen der Öl- oder Fettphase (E) sind gewählt aus Abmischungen von C₁₂-C₁₅-Alkylbenzoat und 2-Ethylhexylisostearat, Abmischungen von C₁₂-C₁₅-Alkylbenzoat und Isotridecylisononanoat sowie Abmischungen von C₁₂-C₁₅₋Alkylbenzoat, 2-Ethylhexylisostearat und/oder Isotridecylisononanoat.

Erfindungsgemäß besonders bevorzugt werden als Öle mit einer Polarität von 5 bis 50 mN/m Fettsäuretriglyceride, insbesondere Sojaöl und/oder Mandelöl eingesetzt.

Aus der Gruppe der Kohlenwasserstoffe kann man beispielsweise Paraffinöl, Squalan, Squalen und insbesondere gegebenenfalls hydrierte Polyisobutene als Öl- oder Fett-.phase (E) verwenden.

In einer Ausführungsform der vorliegenden Erfindung kann die Öl- oder Fettphase (E) gewählt werden aus Guerbetalkoholen. Guerbetalkohole als solche sind bekannt und beispielsweise erhältlich durch Erhitzen von zwei Äquivalenten Alkohol der allgemeinen Formel R¹²-CH₂CH₂-OH in Anwesenheit von beispielsweise Na und/oder Cu zu Alkoholen der Formel R¹²-CH₂-CH₂-CHR¹²-CH₂-OH. Dabei steht R¹² für C₂-C₂₀-Alkyl, verzweigt oder vorzugsweise unverzweigt, insbesondere für unverzweigtes C₃-C₁₄-Alkyl, beispielsweise jeweils unverzweigtes Propyl, Butyl, Pentyl, Hexyl, Heptyl, Octyl, Nonyl, Decyl, Undecyl, Dodecyl, Tridecyl oder Tetradecyl. Besonders bevorzugt als Öl- oder Fettphase (E) geeignete Guerbetalkohole sind 2-n-Butyloctanol (R¹² = n-C₄H₉) und 2-n-Hexyldecanol (R¹² = n-C₆H₁₃) und Abmischungen der vorstehend genannten Guerbetalkohole.

Erfindungsgemäße kosmetische Zubereitungen können weiterhin einen oder mehrere Riech- oder Aromastoffe (F) enthalten.

Geeignete Riech- oder Aromastoffe (F) können Reinsubstanzen oder Mischungen von natürlichen oder synthetischen flüchtigen Verbindungen, die einen Geruch entfalten. Natürliche Riechstoffe sind Extrakte von Blüten (Lilie, Lavendel, Rose, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orange), Wurzeln (Macis. Angelica, Sellerie, Kardamom, Costus, Iris, Calmus), Hölzem (Pinien-, Sandel-, Guajak-, Zedem-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffe sind Produkte vom Typ der Ester, Ether, Aldehyde, Ketone, Alkohole und Kohlenwasserstoffe. Riechstoffe vom Typ der Ester sind z.B. Benzylacetat, Phenoxyethylisobutyrat, 4-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Riechstoffen vom Typ der Ether zählen beispielsweise Benzylethylether, zu den den Riechstoffen vom Typ der Aldehyde z.B. lineare Alkanale mit 8 bis 18 Kohlenstoffatomen, Citral, Citronellal, Citronellyloxyacetaldehyd, Cyclamenaldehyd, Hydroxycitronellal, Lilial und Bourgeonat, zu den Riechstoffen vom Typ der Ketone z.B. Jonone, co-Isomethylionen und Methylcedrylketon, zu den Riechstoffen vom Typ der Alkohole A-nethol, Citronellol, Eugenol, Isoeugenol, Geraniol, Linalool, Benzylalkohol, Phenylethylalkohol und Terioneol, zu den den Riechstoffen-vom Typ der Kohlenwasserstoffe gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Riechstoffe, z.B. Salbeiöl, Kamillenöl, Nelkenöl, Melissenöl, Minzeöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyroenol, Lilial, Lyral, Citronellol, Phenylethylalkohol, α-Hexylzimtaldehyd, α-Amylzimtaldehyd, Geraniol, Benzylaceton, Cyclamenaldehyd, Linalool, Boisambrene®Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Evernyl, Iraldein gamma, Phenylessigsäure, Geranylacetat, Benzylacetat, Rosenoxid, Romillat, Irotyl und Floramat allein oder in Mischungen eingesetzt.

Erfindungsgemäße kosmetische Zubereitungen können weiterhin einen oder mehrere Zusätze (G) enthalten. Zusätze (G) können gewählt sein aus Konditionierungsmitteln, Antioxidantien, ethoxylierten Glycerin-mono- oder Difettsäureestem, Verclickungsmitteln, Schaumbildnern, Netz- und Feuchthaltemitteln, Bioziden, organischen Lösungsmitteln wie beispielsweise Ethanol oder Isopropanol, Glitterstoffen und/oder andere Effektstoffen (z.B. Farbschlieren) und Abrasiva. Glitterstoffe und andere Effektstoffe (z.B. Farbschlieren) sind im Wesentlichen von ästhetischer Bedeutung.

Beispiele für Konditionierungsmittel sind im International Cosmetic Ingredient Dictionary and Handbook (Volume 4, Herausgeber: R. C. Pepe, J.A. Wenninger, G. N. McEwen, The Cosmetic, Toiletry, and Fragrance Association, 9. Auflage, 2002) unter Section 4 unter den Stichworten Hair Conditioning Agents, Humectants, Skin-Conditioning Agents, Skin-Conditioning Agents-Emollient, Skin-Conditioning Agents-Humectant. Skin-Conditioning Agents-Miscellaneous, Skin-Conditioning Agents-Occlusive und Skin Protectans aufgeführt. Weitere Beispiele für Konditionierungsmittel sind in EP-A 0 934 956 (S. 11 bis 13) unter "water soluble conditioning agent" und "oil soluble conditioning agent" aufgeführte Verbindungen. Weitere vorteilhafte Konditionierungsmittel stellen beispielsweise die nach INCI als Polyquatemium bezeichneten Verbindungen dar (insbesondere Polyquatemium-1 bis Polyquaternium-56). Ein ganz besonders bevorzugte Konditioniermittel ist N,N-Dimethyl-N-2-propenyl-2-propenaminiumchlorid (Polyquaternium-7).

Weitere Beispiele für vorteilhafte Konditionierungsmittel sind Cellulosederivate und quaternisierte Guargum Derivate, insbesondere Guar Hydroxypropylammoniumchlorid (z.B. Jaguar Excel®, Jaguar C 162® (Rhodia), CAS 65497-29-2, CAS 39421-75-5) dar.
Auch nichtionische Poly-N-vinylpyrrolidonlPolyvinylacetat-Copolymere (z.B. Luviskol®VA 64 (BASF)), anionische Acrylat-Copolymere (z.B. Luvifliex®Soft (BASF)), und/oder amphotere Amid/Acrylat/Methacrylat Copolymere (z.B. Amphomer® (National Starch)) können erfindungsgemäß vorteilhaft als Konditionierer eingesetzt werden. Weitere Beispiele für vorteilhafte Konditionierungsmittel sind quatemisierte Silikone.

Beispiele für ethoxylierte Glycerin-mono- oder Difettsäureester sind PEG-10 Olivenölglyceride, PEG-11 Avocadoölglyceride, PEG-11 Kakaobutterglyceride, PEG-13 Sonnenblumenölglyceride, PEG-15 Glycerylisostearat, PEG-9 Kokosfettsäureglyceride, PEG-54 Hydriertes Ricinusöl, PEG-7 Hydriertes Ricinusöl, PEG-60 Hydriertes Ricinusöl, Jojobaöl Ethoxylat (PEG-26 Jojoba-Fett-Säuren, PEG-26 Jojobaalkohol), Glycereth-5 Cocoat, PEG-9 Kokosfettsäureglyceride, PEG-7 Glycerylcocoat, PEG-45 Palmkemölglyceride, PEG-35 Ricinusöl, Olivenöl-PEG-7 Ester, PEG-6 Caprylisäure/Caprinsäureglyceride, PEG-10 Olivenölglyceride, PEG-13 Sonnenblumenölglyceride, PEG-7 Hydriertes Ricinusöl, Hydrierte Palmkernölglycerid-PEG-6 Ester, PEG-20 Maisölglyceride, PEG-18 Glyceryloleat-cocoat. PEG-40 Hydriertes Ricinusöl, PEG-40 Ricinusöl, PEG-60 Hydriertes Ricinusöl, PEG-60 Maisölglyceride, PEG-54 Hydriertes Ricinusöl, PEG-45 Palmkemölglyceride, PEG-80 Glycerylcocoat, PEG-60 Mandelölglyceride, PEG-60 "Evening Primrose" Glyceride, PEG-200 Hydriertes Glycerylpalmat, PEG-90 Glycerylisostearat. Dabei steht im Rahmen der vorliegenden Erfindung PEG für Polyethylenglykol und die an PEG anschließende Zahl für das Zahlenmittlere der Ethylenglykoleinheiten des betreffenden Polyethylenglykols.

Bevorzugte ethoxylierte Glycerin-mono- oder Difettsäureester sind PEG-7 Glycerylcocoat, PEG-9 Kokosglyceride, PEG-40 Hydriertes Rizinusöl, PEG-200 hydriertes Glycerylpalmat.

Ethoxylierte Glycerin-mono- oder Difettsäureester kann man in erfindungsgemäßen kosmetischen Zubereitungen zu verschiedenen Zwecken einsetzen. Ethoxylierte Glycerin-mono- oder Difettsaureester mit 3 bis 12 Ethylenoxideinheiten pro Molekül dienen als Rückfetter zur Verbesserung des Hautgefühls nach dem Abtrocknen, ethoxylierter Glycerin-mono- oder Difettsaureester mit 30 bis 50 Ethylenoxideinheiten pro Molekül dienen als Lösungsvermittler für unpolare Substanzen wie Riechstoffe. Ethoxylierte Glycerin-mono- oder Difettsäureester mit über 50 Ethylenoxideinheiten pro Molekül werden als Verdicker eingesetzt.

Beispiele für geeignete Antioxidantien sind alle für kosmetische und/oder dermatologische Anwendungen geeigneten oder gebräuchlichen Antioxidantien.

Vorzugsweise wählt man Antioxidantien aus der Gruppe der Aminosäuren (z.B. Glycin, Histidin, Tyrosin, Tryptophan), Imidazolen (z.B. Urocaninsäure), Peptiden wie D,L-Camosin, D-Camosin, L-Camosin und deren Derivaten (z.B. Anserin), Carotinoide, Carotinen (z.B. α-Carotin, β-Carotin, γ-Lycopin), Chlorogensäure und deren Derivaten, Liponsäure und deren Derivaten (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salzen, Dilaurylthiodipropionat, Distearylthiodipropionat, Thiodipropionsäure und deren Derivaten (Ester, Ether, Peptide, Lipide, Nukleotide, Nukleoside und Salze) sowie Sulfoximinverbindungen (z.B. Buthioninsulfoximine, Homocysteinsulfoximin, Buthioninsuffone, Penta-, Hexa-, Weptathioninsulfoximin) in sehr geringen Dosierungen (z.B. pmol bis µmol/kg erfindungsgemäße Mischung), ferner (Metall)-Chefatoren (z.B. α-Hydroxyfettsäuren, Palmitinsäure, Phytinsäure, Lactoferrin), α-Hydroxysäuren (z. B. Citronensäure, Milchsäure, Apfelsäure), Huminsäure, Gallensäure, Gallenextrakte, Bilirubin, Biliverdin, EDTA, EGTA, ungesättigte Fettsäuren (z.B. γ-Linolensäure, Linolsäure, Ölsäure), Folsäure, Furfurylidensorbitol, Ubichinon und Ubichinol, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-Apalmitat) sowie Coniferylbenzoat des Benzoeharzes, Rutinsäure und deren Derivate, α-Glycosylrutin, Ferulasäure, Furfurylidenglucitol, Camosin, Butylhydroxytoluol, Butylhydroxyanisol , Nordihydroguajakharzsäure, Nordihydroguajaretsäure. Trihydroxybutyrophenon, Harnsäure und deren Derivate, Mannose und deren Derivate, Zink und dessen Derivate (z.B. ZnO. ZnSO₄), Selen und dessen Derivate (z.B. Selenmethionin), Stilbene und deren Derivate (z.B. Stilbenoxid, insbesondere trans-Stilbenoxid) und geeignete Derivate (Salze, Ester, Ether, Zucker, Nukleotide, Nukleoside, Peptide und Lipide).

Geeignete Verdickungsmittel für erfindungsgemäße kosmetische Zubereitungen sind vernetzte Polyacrylsäuren und deren Derivate, Carrageen, Xanthan, Polysaccharide wie Xanthan-gum, Guar-Guar, Agar-Agar, Alginate oder Tylosen, Cellulosederivate, z. B. Carboxymethylcellulose, Hydroxycarboxymethylcellulose, Hydroxyethylpropylcellulose. Hydroxybutylmethylcellulose, Hydroxypropylmethylcellulose, ferner höhermolekulare Polyethylenglycolmono- und -diester von Fettsäuren, Fettalkohole, Monoglyceride und Fettsäuren, Polyvinylalkohol und Polyvinylpyrrolidon. Weitere geeignete Verdicker sind Schichtsilikate.

Geeignete Verdickungsmittel sind weiterhin beispielsweise hydrophile pyrogene Kieselgele, Polyacrylamide, Polyvinylalkohol und Polyvinylpyrrolidon, Ester von Fettsäuren mit Polyolen wie beispielsweise Pentaerythrit oder Trimethylolpropan, Fettalkoholethoxylate mit enger Homologenverteilung oder C₁-C₂₀-Alkyloligoglucoside sowie Elektrolyte wie Kochsalz und Ammoniumchlorid.

Für erfindungsgemäße kosmetische Zubereitungen geeignete Biozide sind Mittel mit spezifischer Wirkung gegen grampositive Bakterien, z.B. Triclosan (2,4,4'-Trichlor-2'-hydroxydiphenylether), Chlorhexidin (1,1'-Hexamethylenbis(5-(4-chlorphenyl)-biguanid) sowie TTC (3,4,4'-Trichlorcarbanilid). Gut geeignete Biozide sind ferner Isothioxalone wie beispielsweise 5-Chlor-2-methyl-3(2H)isothiazolon und 2-Methyl-3(2H)isothiazolon. Quartäre Ammonium-Verbindungen sind prinzipiell ebenfalls geeignet und werden bevorzugt für desinfizierende Seifen und Waschlotionen verwendet. Auch zahlreiche Riechstoffe haben biozide Eigenschaften. Auch eine große Anzahl etherischer Öle bzw. deren charakteristische Inhaltsstoffe wie z.B. Nelkenöl (Eugenol), Minzöl (Menthol) oder Thymianöl (Thymol), zeigen eine ausgeprägte antimikrobielle Wirksamkeit. Weitere geeignete Biozide sind Fluorverbindungen, die beispielsweise zur Kariesprophylaxe geeignet sind wie z. B. NaF, Aminfluoride.

Beispiele für Schaumbildner können beispielsweise sulfongruppenhaltige Tenside sein, insbesondere Natriumlaurysulfat.

Beispiele für Feuchthaltemittel sind Sorbitol, Glycerin, Polyethylenglykol beispielsweise mit einem Molekulargewicht Mₙ im Bereich von 200 bis 1000 g/mol.

Erfindungsgemäße kosmetische Zubereitungen können weiterhin Farbmittel, beispielsweise Farbstoffe oder Pigmente, Glitterstoffe und/oder andere Effektstoffe (z.B. Farbschlieren) enthalten.

Erfindungsgemäße kosmetische Zubereitungen können beispielsweise ein oder mehrere Abrasiva enthalten, beispielsweise Polyethylenglykol, Kieselgel, Calciumcarbonat.

Erfindungsgemäße kosmetische Zubereitungen kann man beispielsweise durch Vermischen von erfindungsgemäßer Dispersion oder Emulsion mit einem oder mehreren der vorstehend aufgeführten Stoffe Öl- oder Fettphase (E), Riech- und Aromastoffen (F) und Zusätzen (G) gegebenenfalls mit Wasser herstellen.

Wünscht man erfindungsgemäße Dispersionen oder Emulsionen als Trennmittel bzw. in Verfahren zur Trennung von Gegenständen einzusetzen, so kann man es beispielsweise für die Herstellung von abziehbaren Filmen oder Aufklebern, oder in Spritzgussmaschinen zum vereinfachten Entformen von Spritzgussteilen. Man kann beispielsweise ein filmförmiges Material, z.B, eine Polymerfolie aus Polyester, Polyethylen, Polypropylen oder Polyurethan, ein- oder zweiseitig mit erfindungsgemäßer Dispersion oder Emulsion in Kontakt bringen und danach trocknen, beispielsweise an der Luft. Bevorzugt vermischt man erfindungsgemäße Dispersion oder Emulsion mit einem weiteren Material, beispielsweise kolloidaler Kieselsäure, und bringt danach mit filmförmigem Material in Kontakt.

Ein weiterer Gegenstand der vorliegenden Erfindung sind Mischungen, kurz auch erfindungsgemäße Mischungen genannt, enthaltend mindestens einen hydrophilen Stoff, mindestens einen hydrophoben Stoff und mindestens ein erfindungsgemäßes Copolymer. Erfindungsgemäße Mischungen können Wasser enthalten. In einer speziellen Ausführungsform der vorliegenden Erfindung enthalten erfindungsgemäße Mischungen kein Wasser. Beispiele für hydrophile Stoffe sind Alkohole, insbesondere C₁-C₄-Alkanole, Polyole, Glycerin, Polyvinylalkohol und Polyacrylate. Beispiele für hydrophobe Stoffe sind hydrophobe Verbindungen (D).

In einer Ausführungsform der vorliegenden Erfindung enthalten erfindungsgemäße Mischungen
im Bereich von 0,5 bis 95 Gew.-% hydrophilen Stoff,
im Bereich von 0,5 bis 95 Gew.-% hydrophoben Stoff,
im Bereich von 0,4 bis 40 Ges.-% erfindungsgemäßes Copolymer.

Ein weiterer Gegenstand der vorliegenden Erfindung ist die Verwendung von Copolymer (A) und insbesondere von erfindungsgemäßem Copolymer als Komponente von wasserbasierten Lacken und Beschichtungsmitten sowie Klebstoffen, in der Zerspanungstechnik und der Metallverarbeitung, beispielsweise in der Schneid- als Flotationsmittel-Zusatz (Compound) in der Mineral- und Erzförderung sowie als Flotationsmittel-Zusatz in der Mineral- und Erzverarbeitung.

Die Erfindung wird durch Arbeitsbeispiele erläutert.

### I. Herstellung von erfindungsgemäßen Copolymeren (A)

### I.1 Herstellung von erfindungsgemäßem Copolymer (A.1)

Man stellte die folgenden Lösungen und Emulsionen her

Lösung I.1.1: 44 g Acrylsäure (a.1) in 102,6 g destilliertem Wasser

### Emulsion I.1.2:

42.2 g Acrylsäure (a.1), 66,8 g tert.-Butylmethacrylat (b.1), 258,6 g 2-Ethylhexylacrylat (c.1) und 12,3 g n-Dodecylmercaptan wurden mit Hilfe von 15,2 g einer 15 Gew.-% wässrigen Lösung von Natriumlaurylsulfat und 30,5 g einer 32 Gew.-% wässrigen Lösung des Natriumsalzes eines Schwefelsäurehalbesters von C₁₆-Ethoxylaten (im Mittel 30 mol Ethylenoxid/mol) in 225,1 ml destilliertem Wasser emulgiert

Lösung I.1.3: 8,2 g Na₂S₂O₈ wurden in 109,4 ml destilliertem Wasser gelöst.

In einem 2-Liter-Rührgefäß mit mehreren Zuläufen, Rückflusskühler und Gaseinleitungsrohr legte man 195,6 ml destilliertes Wasser und 6,5 g einer 15 Gew.-% wässrigen Lösung von Natriumlaurylsulfat vor. Dann ließ man 15 Minuten lang Stickstoff durch die Vorlage sprudeln und erwärmte unter Rühren auf 80°C.

Danach begann man mit der Zugabe von Lösung I.9.3 und gab sie innerhalb von 4,5 Stunden tropfenweise zu. Etwa 3 Minuten nach Beginn der Zugabe von Lösung 1.1.3 begann man mit der Zugabe von Lösung I.1.1, die man innerhalb von 60 Minuten zudosierte. Danach begann man mit der Zugabe von Emulsion 1.1.2. Man gab Emulsion 1.1.2 Innerhalb von 3 Stunden zu, wobei man weiter rührte. Man rührte weitere 90 MInuten bei 80°C nach und ließ dann auf 50°C abkühlen und gab danach innerhalb von 30 Minuten 47,9 g einer 50 Gew.-% wässrigen Natriumhydroxidlösung zu. Danach kühlte man auf Zimmertemperatur ab. Man erhielt eine erfindungsgemäße wässrige Dispersion mit einem Feststoffgehalt von 40%. Erfindungsgemäßes Copolymer (A.1) hatte ein mittleres Molekulargewicht M_{w} von 10.400 g/mol.

### I.2 Herstellung von erfindungsgemäßem Copolymer (A.2)

Man stellte die folgenden Lösungen und Emulsionen her:

Lösung I.2.1: 30,9 g Acrylsäure (a.1) in 72,1 g destilliertem Wasser

### Emulsion 1.2.2:

29,7 g Acrylsäure (a.1), 103,4 g Cyclohexylmethacrylat (b.2), 327,9 g 2-Ethylhexylacrylat (c.1) und 14,8 g n-Dodecylmercaptan wurden mit Hilfe von 20,1 g einer 15 Gew.-% wässrigen Lösung von Natriumlaurylsulfat und 40,4 g einer 32 Gew.-% wässrigen Lösung des Natriumsalzes eines Schwefelsäurehalbesters von C₁₆₋Ethoxylaten (im Mittel 30 mol Ethylenoxid/mol) in 237 ml destilliertem Wasser emulgiert.

Lösung I.2.3: 9,8 g Na₂S₂O₈ wurden in 130,7 ml destilliertem Wasser gelöst.

In einem 2-Liter-Rührgefäß mit mehreren Zuläufen, Rückflusskühler und Gaseinleitungsrohr legte man 134 ml destilliertes Wasser und 8,6 g einer 15 Ges.-% wässrigen Lösung von Natriumlaurylsulfat vor. Dann ließ man 15 Minuten lang Stickstoff durch die Vorlage sprudeln und erwärmte unter Rühren auf 80°C.

Danach begann man mit der Zugabe von Lösung 1.2.3 und gab sie innerhalb von 4,5 Stunden tropfenweise zu. Etwa 3 Minuten nach Beginn der Zugabe von Lösung I.2.3 begann man mit der Zugabe von Lösung I.2.1, die man innerhalb von 60 Minuten zudosierte. Danach begann man mit der Zugabe von Emulsion 1.2.2. Man gab Emulsion I.2.2 innerhalb von 3 Stunden zu, wobei man weiter rührt. Man rührte weitere 90 Minuten bei 80°C nach und ließ dann auf 50°C abkühlen und gab danach innerhalb von 30 Minuten 84,1 g einer 20 Gew.-% wässrigen Natriumhydroxidlösung zu. Danach kühlte man auf Zimmertemperatur ab. Man erhielt eine erfindungsgemäße wässrige Dispersion mit einem Feststoffgehalt von 43,4% und einem pH-Wert von 5,1. Erfindungsgemäßes Copolymer (A.2) hatte ein mittleres Molekulargewicht M_{w} von 9.200 g/mol.

### 1.3 Herstellung von erfindungsgemäßem Copolymer (A.3)

Man stellte die folgenden Lösungen und Emulsionen her:

Lösung I.3.1: 44 g Acrylsäure (a.1) in 102,6 g destilliertem Wasser

### Emulsion 1.3.2:

42.2 g Acrylsäure (a.1), 66,2 g sek.-Butylacrylat (2-Methylpropylacrylat) (b.3), 258,6 g 2-Ethylhexylacrylat (c.1) und 12,1 g n-Dodecylmercaptan wurden mit Hilfe von 14,9 g einer 15 Gew.-% wässrigen Lösung von Natriumlaurylsulfat und 29,9 g einer 32 Gew.-% wässrigen Lösung des Natriumsalzes eines Schwefielsäurehalbesters von C₁₆-Ethoxylaten (im Mittel 30 mol Ethylenoxid/mol) in 225,4 ml destillierten Wasser emulgiert.

Lösung 1.3.3: 8,1 g Na₂S₂O₈ wurden in 107,6 ml destilliertem Wasser gelöst.

In einem 2-Liter-Rührgefäß mit mehreren Zuläufen, Rückflusskühler und Gaseinleitungsrohr legte man 195,6 ml destilliertes Wasser und 6,4 g einer 15 Gew.-% wässrigen Lösung von Natriumlaurylsulfat vor. Dann ließ man 15 Minuten lang Stickstoff durch die Vorlage sprudeln und erwärmte unter Rühren auf 80°C.

Danach begann man mit der Zugabe von Lösung 1.3.3 und gab sie innerhalb von 4,5 Stunden tropfenweise zu. Etwa 3 Minuten nach Beginn der Zugabe von Lösung I.3.3 begann man mit der Zugabe von Lösung 1.3.1, die man innerhalb von 60 Minuten zudosierte. Danach begann man mit der Zugabe von Emulsion 1.3.2. Man gab Emulsion I.3.2 innerhalb von 3 Stunden zu, wobei man weiter rührte. Man rührte weitere 90 Minuten bei 80°C nach und ließ dann auf 50°C abkühlen und gab danach innerhalb von 30 Minuten 47,9 g einer 50 Gew.-% wässrigen Natriumhydnaxidlösung zu. Danach kühlte man auf Zimmertemperatur ab. Man erhielt eine erfindungsgemäße wässrige Dispersion mit einem Feststoffgehalt von 40,7 % und einem pH-Wert von 4,9. Erfindungsgemäßes Copolymer (A.3) hatte ein mittleres Molekulargewicht M_{w} von 9.100 g/mol.

### I.4 Herstellung von Copolymer (A.4)

Man stellte die folgenden Lösungen und Emulsionen her:

Lösung I.4.1: 30,9 g Acrylsäure (a.1) in 134 g destilliertem Wasser

### Emulsion I.4.2:

29,7 g Acrylsäure (a.1), 78,8 g tert.-Butylacrylat (b.4), 327,9 g 2-Ethylhexylacrylat (c.1) und 14 g n-Dodecylmercaptan wurden mit Hilfe von 19 g einer 15 Gew.-% wässrigen Lösung von Natriumlaurylsulfat und 38,1 g einer 32 Gew.-% wässrigen Lösung des Natriumsalzes eines Schwefelsäurehalbesters von C₁₆-Ethoxylaten (im Mittel 30 mol Ethylenoxid/mol) in 227,4 ml destilliertem Wasser emulgiert.

Lösung I.4.3: 9,3 g Na₂S₂O₈ wurden in 124,2 ml destilliertem Wasser gelöst.

In einem 2-Liter-Rührgefäß mit mehreren Zuläufen, Rückflusskühler und Gaseinleitungsrohr legte man 134,4 ml destilliertes Wasser und 8,1 g einer 15 Gew.-% wässrigen Lösung von Natriumlaurylsulfat vor. Dann ließ man 15 Minuten lang Stickstoff durch die Vorlage sprudeln und erwärmte unter Rühren auf 80°C.

Danach begann man mit der Zugabe von Lösung 1.4.3 und gab sie innerhalb von 4,5 Stunden tropfenweise zu. Etwa 3 Minuten nach Beginn der Zugabe von Lösung I.4.3 begann man mit der Zugabe von Lösung I.4.1, die man innerhalb von 60 Minuten zudosierte. Danach begann man mit der Zugabe von Emulsion 1.4.2. Man gab Emulsion 1.4.2 innerhalb von 3 Stunden zu, wobei man weiter rührte. Man rührte weitere 90 Minuten bei 80°C nach und ließ dann auf 30°C abkühlen und gab danach innerhalb von 30 Minuten 84,1 g einer 20 Gew.-% wässrigen Natriumhydroxidlösung zu. Danach kühlte man auf Zimmertemperatur ab. Man erhielt eine erfindungsgemäße wässrige Dispersion mit einem Feststoffgehalt von 42,8 % und einem pH-Wert von 5,1. Copolymer (A.4) hatte ein mittleres Molekulargewicht M_{w} von 9.100 g/mol.

### 1.5 Herstellung von erfindungsgemäßem Copolymer (A.5)

Man stellte die folgenden Lösungen und Emulsionen her:

Lösung I.5.1: 30,9 g Acrylsäure (a.1) in 134 g destilliertem Wasser

### Emulsion I.5.2:

48,5 g Acrylsäure (a.1), 76,8 g tert.-Butylmethacrylat (b.1), 297,3 g 2-Ethylhexylacrylat (c.1) und 1,4 g tert.-Dodecylmercaptan wurden mit Hilfe von 17,5 g einer 15 Gew.-% wässrigen Lösung von Natriumlaurylsulfat und 35,1 g einer 32 Gew.-% wässrigen Lösung des Natriumsalzes eines Schwefelsäurehalbesters von C₁₈-Ethoxylaten (im Mittel 30 mol Ethylenoxid/mol) in 258,7 ml destilliertem Wasser emulgiert.

Lösung I.5.3: 9,5 g Na₂S₂O₈ wurden in 125,7 ml destilliertem Wasser gelöst.

In einem 2-Liter-Rührgefäß mit mehreren Zuläufen, Rückflusskühler und Gaseinleitungsrohr legte man 140,6 ml destilliertes Wasser und 7,5 g einer 15 Gew.-% wässrigen Lösung von Natriumlaurylsulfat vor. Dann ließ man 15 Minuten lang Stickstoff durch die Vorlage sprudeln und erwärmte unter Rühren auf 90°C.

Danach begann man mit der Zugabe von Lösung 1.5.3 und gab sie innerhalb von 2,75 Stunden tropfenweise zu. Etwa 3 Minuten nach Beginn der Zugabe von Lösung I.5.3 begann man mit der Zugabe von Lösung I.4.1, die man innerhalb von 30 Minuten zudosierte. Danach begann man mit der Zugabe von Emulsion 1.4.2. Man gab Emulsion I.5.2 innerhalb von 2 Stunden zu, wobei man weiter rührte. Man rührte weitere 60 Minuten bei 90°C nach und gab danach innerhalb von 15 Minuten 110,1 g einer 25 Gew.-% wässrigen Natriumhydroxidlösung zu. Danach kühlte man auf Zimmertemperatur ab. Man erhielt eine erfindungsgemäße wässrige Dispersion mit einem Feststoffgehalt von 42,9 % und einem pH-Wert von 4,9. Erfindungsgemäßes Copolymer (A.5) hatte ein mittleres Molekulargewicht M_{w} von 86.000 g/mol.

### I.6 Herstellung von Vergleichs-Copolymer (V-CP.6)

Lösung I.6.1: 44 g Acrylsäure (a.1) in 102,6 g destilliertem Wasser

### Emulsion I.6.2:

42,2 g Acrylsäure (a.1), 66,8 g n-Butylmethacrylat. 258,6 g 2-Ethylhexylacrylat (c.1) und 12,3 g n-Dodecylmercaptan wurden mit Hilfe von 15,2 g einer 15 Gew.-% wässrigen Lösung von Natriumlaurylsulfat und 30,5 g einer 32 Gew.-% wässrigen Lösung des Natriumsalzes eines Schwefelsäurehalbesters von C₁₈-Ethoxylaten (im Mittel 30 mol Ethylenoxid/mol) in 225,1 ml destilliertem Wasser emulgiert.

Lösung I.6.3: 8,2 g Na₂S₂O₈ wurden in 109,4 ml destilliertem Wasser gelöst.

In einem 2-Liter-Rührgefäß mit mehreren Zuläufen, Rückflusskühler und Gaseinleitungsrohr legte man 195,6 ml destilliertes Wasser und 6,5 g einer 15 Gew.-% wässrigen Lösung von Natriumlaurylsulfat vor. Dann ließ man 15 Minuten lang Stickstoff durch die Vorlage sprudeln und erwärmte unter Rühren auf 80°C.

Danach begann man mit der Zugabe von Lösung I.6.3, die man innerhalb von 4,5 Stunden tropfenweise zugab. 3 Minuten nach Beginn der Zugabe von Lösung I.6.3 begann man mit der Zugabe von Lösung I.6.1, die man innerhalb von 60 Minuten zudosierte. Danach begann man mit der Zugabe von Emulsion I.6.2. Man gab Emulsion I.6.2 innerhalb von 3 Stunden unter Rühren zu. Man rührte weitere 90 Minuten bei 80°C nach, ließ dann auf 50°C abkühlen und gab danach innerhalb von 30 Minuten 47,9 g einer 50 Gew.-% wässrigen Natriumhydroxidlösung zu. Danach kühlte man auf Zimmertemperatur ab. Man erhielt eine wässrige Dispersion mit einem Feststoffgehalt von 40,2%. Copolymer (V-CP.6) hatte ein mittleres Molekulargewicht M_{w} von 10.100 g/mol.

### 1.7 Herstellung von erfindungsgemäßem Copolymer (A.7)

Lösung I.7.1: 38 g Acrylsäure (a.1) in 25,3 g destilliertem Wasser

### Emulsion 1.7.2:

36,4 g Acrylsäure (a.1), 57,6 g tert.-Butylmethacrylat (b.1), 223,0 g 2-Ethylhexylacrylat (c.1), 53,2 g α-C₁₆H₃₂ (d.1) und 1,2 g tert-Dodecylmercaptan wurden mit Hilfe von 15,6 g einer 15 Gew.-% wässrigen Lösung von Natriumlaurylsulfat und 31,3 g einer 32 Gew.-% wässrigen Lösung des Natriumsalzes eines Schwefelsäurehalbesters von C₁₆-Alkanol-Ethoxylat (im Mittel 30 mol Ethylenoxid/mol) in 194,0 ml destilliertem Wasser emulgiert.

Lösung 1.7.3: 8,2 g Na₂S₂O₈ wurden in 108,4 ml destilliertem Wasser gelöst.

In einem 2-Liter-Rührgefäß mit mehreren Zuläufen, Rückflusskühler und Gaseinleitungsrohr legte man 105,5 ml destilliertes Wasser und 6,7 g einer 15 Gew.-% wässrigen Lösung von Natriumlaurylsulfat vor. Dann ließ man 15 Minuten lang Stickstoff durch die Vorlage sprudeln und erwärmte unter Rühren auf 90°C.

Danach begann man mit der Zugabe von Lösung 1.7.3 und gab sie innerhalb von 2,75 Stunden tropfenweise zu. Etwa 3 Minuten nach Beginn der Zugabe von Lösung I.7.3 begann man mit der Zugabe von Lösung I.7.1, die man innerhalb von 30 Minuten zudosierte. Danach begann man mit der Zugabe von Emulsion I.7.2. Man gab Emulsion I.7.2 innerhalb von 2 Stunden zu, wobei man weiter rührte. Man rührte weitere 60 Minuten bei 90°C nach und gab danach innerhalb von 30 Minuten 82,6 g einer 25 Gew.-% wässrigen Natriumhydroxidlösung zu. Danach kühlte man auf Zimmertemperatur ab. Man erhielt eine erfindungsgemäße wässrige Dispersion von Copolymer (A.7) mit einem Feststoffgehalt von 38,4% und einen pH-Wert von 4,9. Die Viskosität betrug 3185 mPa·s, bestimmt nach DIN EN ISO 2555 (Brookfield DV-E Viscometer, Spindel Nr. 3 des RV Spindelsatz, 50 upm).

**Tabelle 1: Charakterisierung der erfindungsgemäßen Copolymere und eines Vergleichscopolymers**

| Copolymer | (a.1) [Gew.-%] | (b), [Gew.-%] | (c.1) [Gew.-%] | (d.1) | M_{w} [g/mol] | Feststoffgehalt [%] | pH-Wert |
|---|---|---|---|---|---|---|---|
| (A.1) | 21,0 | (b.1), 16,2 | 62,8 | - | 10.400 | 40 | 5.0 |
| (A.2) | 12,3 | (b.2), 21,0 | 66,7 | - | 9.200 | 43,4 | 5,1 |
| (A.3) | 21,3 | (b.3) 14,9 | 63,8 | - | 9.100 | 40,7 | 4,9 |
| (A.4) | 12,2 | (b.4), 21,7 | 66,1 | - | 9.100 | 42,8 | 5,1 |
| (A.5) | 21,0 | (b.1), 16,2 | 62,8 | - | 86.000 | 42,9 | 4,9 |
| V-CP.6 | 21,0 | x | 62,8 | - | 10.100 | 40,2 | 5,0 |
| (A.7) | 18,2 | (b.1), 14,1 | 54,6 | 13,0 | n.b. | 38,4 | 4,9 |

| | | | | | | | |
|---|---|---|---|---|---|---|---|
| Zur Herstellung von V-CP.6 wurden statt eines Comonomers (b) 16,2 Gew.-% n-Butylmethacrylat verwendet. n.b.: nicht bestimmt | | | | | | | |

### II. Anwendungsbeispiele

### II.1 Herstellung von Chrom-freiem Möbelleder

Angaben in % sind stets Gew.-% und beziehen sich auf die Pickelblöße, wenn nicht ausdrücklich anders angegeben. Die Werte in % beziehen sich bei Wirkstoffformulierungen stets auf den Feststoff- oder Wirkstoffgehalt.

Die Haut eines Süddeutschen Rindes wurde mit 2,5 % Glutardialdehyd und 3 % Sulfongerbstoff aus EP-B 0 459 168, Beispiel K1, in ein entsprechendes Halbzeug (wetwhite) überführt. Nach dieser Vorgerbung lag der pH-Wert der Flotte bei 3,9. Die Halbzeuge wurden nach dem Abwelken auf eine Stärke von 1,0 mm gefalzt und in fünf Streifen zu je ca. 400 g geschnitten.

In separaten Fässern wurden die Streifen mit jeweils 100 % Wasser, 6 % Sulfongerbstoff aus EP-B 0 459 168, Beispiel K1, 4 % Tara (Vegetabilgerbstoff), 2,5 % Relugan® EH-S (Harzgerbstoff) sowie 1,5 % Farbstoff nach Beispiel 4.18 aus

EP-B1 0 970 148 über 60 Minuten bei 25°C bis 30°C im Fass bei 10 Umdrehungen pro Minute behandelt. Anschließend wurde mit Ameisensäure ein pH-Wert von 3,6 eingestellt und nach weiteren 20 Minuten die Flotte gewechselt. In die frische Flotte (100%) dosiert man je 5 % der in Beispiel I.1 bis I.5 beschriebenen erfindungsgemäßen Dispersionen der Copolymere (A.1) bis (A.5) bzw. 5 % einer 40 Gew.-% wässrigen Lösung von V-CP.6, gefolgt von 4 % Fettlicker nach WO 03/023069, Beispiel A, 1 % Lipamin® OK und weiteren 1,5 % Farbstoff nach Beispiel 4.18 aus EP-B1 0 970 148. Nach einer Walkzeit von weiteren 60 Minuten wurde mit Ameisensäure auf einen pH-Wert von 3,2 abgesäuert und vor dem Ablassen der Flotte entsprechende Proben gezogen. Die Leder werden zweimal mit je 100 % Wasser gewaschen, über Nacht feucht gelagert und nach dem Abwalken auf Spannrahmen bei 50 °C getrocknet. Nach dem Stollen wurden die erfindungsgemäßen Leder L.1 bis L.5 und V-L.6 wie unten stehend beurteilt.

Die Bewertung erfolgte nach einem Notensystem von 1 (sehr gut) bis 5 (mangelhaft). Die Bewertung der Flottenauszehrung erfolgte visuell nach den Kriterien Restfarbstoff (Extinktion) und Trübung.

**Tabelle 2: Eigenschaften von Ledern und Vergleichsleder**

| Leder | Copolymer | Fülle | Weichheit | Narbenfestigkeit | Flottenauszehrung | Durchfärbung (Schnitt) | Egalität Färbung |
|---|---|---|---|---|---|---|---|
| L.1 | (A.1) | 1,5 | 1 | 2 | 2 | 2 | 1,5 |
| L.2 | (A.2) | 2 | 2 | 2,5 | 2,5 | 2 | 2 |
| L.3 | (A.3) | 2 | 2,5 | 1,5 | 1,5 | 1,5 | 1,5 |
| L.4 | (A.4) | 2 | 1,5 | 2 | 2 | 1,5 | 2 |
| L.5 | (A.5) | 1,5 | 1 | 2 | 2 | 2 | 1,5 |
| V-L.6 | V-CP.6 | 3 | 3,5 | 2,5 | 2,5 | 2,5 | 3 |

Die Prüfergebnisse wiesen die erfindungsgemäßen Copolymere und insbesondere jene mit tert.-Butyl-Gruppen als hervorragende synthetische Polymer-Licker aus. Dabei gefiel auch der sehr natürliche Griff ohne die ansonsten polymertypische Gummielastizität der Leder, wie sie bei einfachen Polyacrylaten und Polymethaaylaten häufig (im negativen Sinn) beobachtet wird. Die durchweg gut oder sehr gut bewertete Leder-Durchfärbung und Egalität spricht für einen zusätzlichen dispergierenden Effekt der erfindungsgemäßen Copolymere.

### II.2 Herstellung hydrophobierter Schuhoberleder

Zwei handelsübliche Rinder-Wetblue (Fa. Packer, USA) wurden auf eine Stärke von 1,7-1,9 mm gefalzt. Der Kernbereich wurde in fünf Streifen zu je ca. 800 g geschnitten. Anschließend werden die Streifen in einem Fass (50I) und einer Flottenlänge von 200 % (bezogen auf Falzgewicht) im Abstand von 10 Minuten mit 1,5 % Natriumformiat und 0,5 % Natriumbicarbonat sowie 1 % Naphthalinsulfonsäure-Formaldehyd-Kondensationsprodukts, hergestellt nach US 5,186,846, Beispiel "Dispergiermittel 1", versetzt. Nach 70 Minuten wurde die Flotte abgelassen. Die Streifen wurden dann auf separate Walk-Fässer verteilt.

Die separaten Walk-Fässer wurden dann mit 100 % Wasser(25 bis 35°C) beschickt. Danach wurde mit 5 % einer 40 Gew.-% wässrigen Polymethacrylsäurelösung (Mₙ 30.000 g/mol, pH-Wert 5,5) versetzt. Man walkte 20 Minuten und dosierte in Folge jeweils 2 % Sulfongerbstoff aus EP-B 0 459 168, Beispiel K1, und 4% Vegetabilgerbstoff Mimosa. Nach 60 Minuten wurden 2 % einer 50 Gew.-% (Feststoffgehalt) wässrigen Lösung von Farbstoffen dosiert, deren Feststoffe wie folgt zusammengesetzt waren:
70 Gewichtsteile Farbstoff aus EP-B 0 970 148, Beispiel 2.18,
30 Gewichtsteile Acid Brown 75 (Eisenkomplex), Colour Index 1.7.16

In der Zwischenzeit wurden die in Tabelle 1 aufgeführten Copolymerlösungen mit einem Polysiloxan der Formel 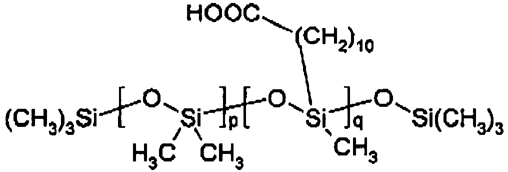 als statistisches Cokondensat mit q = 3 und p = 145 (jeweils Durchschnittswerte), kinematische Viskosität 600 mm²/s bei 20°C,
sowie N-Oleylsarkosid (C.1) im Gewichtsverhältnis von jeweils 3 : 2 : 0,2 mit Hilfe eines Rührstabs voremulgiert. Man erhielt die fünf erfindungsgemäßen Emulsionen EM.1 bis EM.5. Dabei zeigt sich, dass die so erhältlichen Emulsionen auf Basis der erfindungsgemäßen Copolymerdispersionen über 3 Tage keinerlei Tendenz zur Phasentrennung aufwiesen, während bei einer Emulsion, die mit V-CP.6 hergestellt wurde, bereits nach ca. 5 h die Phasentrennung eintrat.

Danach wurde bei 50°C mit 7 % je einer frisch präparierten Emulsion pro separatem Fass versetzt, wobei jeweils das mit Copolymer (A.1) hergestellte Leder mit EM. 1 versetzt wurde, und 60 Minuten gewalkt Es wird dann erneut mit Ameisensäure in mehreren Schritten auf einen pH-Wert on 3,5 abgesäuert und noch 20 Minuten bei diesem pH-Wert gewalkt und die Flotte abgelassen. In frischer Flotte (100%-150%) fixiert man bei 40°C mit 3% handelsübliche Chromsulfat (Chromitan® B, 33% basisch, Cr₂O₃-Gehalt: 27%) über eine Dauer von 90 Minuten. Anschließend wurde zweimal mit je 150% Wasser gewaschen und die Leder über Nacht gelagert und anschließend ausgereckt, vakuumgetrocknet, konditioniert und gestollt. Man erhielt die Leder L.7 bis L.11 und das Vergleichsleder V-L.12. Die Bewertung erfolgte nach einem Notensystem von 1 (sehr gut) bis 5 (mangelhaft).

Die Ergebnisse sind zusammen mit den ledertechnischen Beurteilungen in Tabelle 3 zusammengestellt

**Tabelle 3: Eigenschaften der Leder L.7 bis L.11 und des Vergleichsleders V-L.12**

| Leder | Copolymer | Fülle | Weichheit | Narbenfestigkeit | Egalität Färbung und Fettverteilung | Statische Wasseraufnahme [% H₂O] | Maeser [Flexe] |
|---|---|---|---|---|---|---|---|
| L.7 | (A.1) | 1 | 1,5 | 1 | 1 | 19 | >100.000 |
| L.8 | (A.2) | 2 | 2 | 2,5 | 2 | 21 | 48.000 |
| L.9 | (A.3) | 2 | 2,5 | 1,5 | 1,5 | 25 | 27.000 |
| L.10 | (A.4) | 2 | 2 | 2 | 2 | 24 | 34.000 |
| L.11 | (A.5) | 1,5^{.} | 1,5 | | 1 | 19 | >100.000 |
| V-L.12 | V-CP.6 | 3 | 4 | 2,5 | 3 | 29 | 11.000 |

Die Maeserwerte wurden mit einem Maesertester nach ASTM D 2099 jeweils als Doppelbestimmungen bestimmt. Zur Bestimmung der statischen Wasseraufnahme wurde das Leder über einen Zeitraum von 60 Minuten vollständig in Wasser eingetaucht. Die statische Wasseraufnahme ist bezogen auf das fertige Leder. Die Färbung wurde durch optische Inspektion durch ein Probandenteam beurteilt. Die Bewertungen erfolgte mit Noten wie in der Schule: 1 (sehr gut) bis 6 (ungenügend).

### II.3 Weitere Beispiele zur Herstellung von Schuhoberleder

Eine Hälfte eines handelsüblichen Rinder Wetblue (Fa. Packers, USA) wurde auf eine Stärke von 2,0 - 2,1 mm gefalzt. Der Kernbereich wurde in 4 Streifen, ca. 600 g, geschnitten. Die Streifen wurden in einem Fass erst gewaschen (200% Wasser) und dann mit 2 Ges.-% Natriumformiat und 0,5 Ges.-% Natriumbicarbonat in 50 Gew.-% Wasser bei 35°C über einen Zeitraum von 90 Minuten neutralisiert. Nach der Neutralisation wurden die Leder mit 200 Gew.-% Wasser gewaschen und auf vier Fässer verteilt.

Die Fässer wurden mit je 75 Gew.-% Wasser und 3% einer 40 Ges.-% Polymethacrylsäurelösung (Mₙ 30.000 g/mol, pH-Wert 5,5) versetzt. Nach einer Walkzeit von 20 min wurde eine Mischung von 5% Vegetabilgerbstoff (Mimosa) und 2% Sulfongerbstoff aus EP-B 0 459168, Beispiel K1, hinzu gegeben. Nach einer Walkzeit von weiteren 20 min wurden 2 % einer 50 Ges.-% (Feststoffgehalt) wässrigen Lösung von Farbstoffen dosiert, deren Feststoffe wie folgt zusammengesetzt waren:
70 Gewichtsteile Farbstoff aus EP-B 0 970 148, Beispiel 2.18,
30 Gewichtsteile Acid Brown 75 (Elsenkomplex), Colour Index 1.7.16

Weitere 20 min später wurde 6% erfindungsgemäße Emulsion EM.6 oder EM.7, hergestellt aus Lösung von erfindungsgemäßem Copolymer (A.1) gemäß Beispiel 1.1, einem Silikonöl S.1 oder S.2 (Polydimethylsiloxan-öl), kinematische Viskosität 50 mm²/s bzw. 350 mm²/s bei 25°C, sowie dem Na-Salz von N-Oleylsarkosid im Gewichtsverhältnis von 3:1:0,2 dosiert. Erfindungsgemäße Emulsionen EM.6 und EM.7 sind bei Zimmertemperatur, 40°C und 60°C über jeweils 7 Tage lagerstabil.

Man walkte 60 Minuten. Danach wurden weitere 75% Wasser mit einer Temperatur von 60°C hinzudosiert Abschließend wurde mit HCOOH in mehreren Schritten auf einen pH-Wert von ca. 3,6 abgesäuert. Man ließ die Flotte ab und wusch mit 200% Wasser. Danach wurde in einer frischen Flotte von 100% mit 3% alkalifreiem Chromgerbstoff, Basizität 40, fixiert. Die Walkzeit betrug 90 min und die Temperatur 40°C. Anschließend wurde zweimal mit je 200% Wasser gewaschen. Die Leder wurden über Nacht gelagert, dann ausgereckt, vakuumgetrocknet, konditioniert und gestollt.

Die Ergebnisse sind zusammen mit den ledertechnischen Beurteilungen in Tabelle 3a zusammengestellt

**Tabelle 3a: Eigenschaften der L.13 bis L.16.**

| Leder | Silikonöl | Fülle | Weich heit | Narbenfestigkeit | Färbung | Statische Wasseraufnahme | Maeser [Flexe] |
|---|---|---|---|---|---|---|---|
| L.13 | S.1 | 2 | 1-2 | 1-2 | 2 | 22 | 30.000 |
| L.14 | S.2 | 2 | 2 | 2 | 2-3 | 22 | 17.000 |

Benotung: 1 (sehr gut) - 5(mangelhaft)
Statische Wasseraufnahme: angegeben in Gew.-% aufgenommenes H₂O

Die Maeserwerte wurden mit einem Maesertester nach ASTM D 2099 durchgeführt. Zur Bestimmung der statischen Wasseraufnahme wurde das Leder über einen Zeitraum von 60 Minuten vollständig in Wasser eingetaucht. Die Färbung wurde visuell beurteilt

### II.4 Herstellung von Bekleidungsleder, Handschuh- und Polsterleder

Es wurden in Analogie zur Herstellung von EM.1 erfindungsgemäße Emulsionen mit Zusammensetzungen nach Tabelle 4 hergestellt. Der zu 100% fehlende Teil war jeweils Wasser.

**Tabelle 4: Zusammensetzung von erfindungsgemäßen Emulsionen EM.8 bis EM. 10**

| Nummer | (A.1), [Gew.-%] | Polysiloxan [Gew.-%] | (C), [Gew.-%] |
|---|---|---|---|
| EM.8 | 50 | 2 | (C.2), 10 |
| EM.9 | 50 | 2 | (C.3), 10 |
| EM.10 | 50 | 2 | (C.4), 10 |
| EM.11 | 50 | 2 | (C.4), 10 |

| | | | |
|---|---|---|---|
| (A) bezeichnet die Menge an Dispersion nach Beispiel I.1 von erfindungsgemäßen Copolymeren (A) in g. Polysiloxan ist das Polysiloxan aus Beispiel II.2 der vorliegenden Anmeldung in g. (C.2): n-C₁₈H₃₇-(O-CH₂CH₂)₃-O-PO₃Na₂ (C.3): n-C₁₂H₂₅-(O-CH₂CH₂)₃-O-PO₃Na₂ (C.4): cis-CH₃(CH₂)₇-CH=CH-(CH₂)₈-O-PO(OH)₂ | | | |

Eine Hälfte eines handelsüblichen Rinder Wetblue (Fa. Packers, USA) wurde auf eine Stärke von 2,0-2,1 mm gefalzt. Der Kernbereich wurde in 3 Streifen, ca. 700 g, geschnitten. Die Streifen wurden in einem Fass erst gewaschen (200% Wasser) und dann mit 2 Gew.-% Natriumformiat und 0,5 Gew.-% Natriumbicarbonat in 50 Gew.-% Wasser bei 35°C über einen Zeitraum von 90 Minuten neutralisiert. Nach der Neutralisation wurden die Leder mit 300 Ges.-% Wasser gewaschen und auf drei Fässer verteilt.

Die Fässer wurden mit je 100 Ges.-% Wasser und 3% einer 40 Gew.-% Polymethacrylsäurelösung (Mₙ 30.000 g/mol, pH-Wert 5,5) sowie 6% Vegetabilgerbstoff Mimosa versetzt. Nach einer Walkzeit von 20 min wurde 2% Sulfongerbstoff aus EP-B 0 459 168, Beispiel K1, hinzu gegeben. Nach einer Walkzeit von weiteren 30 min wurden 2 % einer 50 Ges.-% (Feststoffgehalt) wässrigen Lösung von Farbstoffen dosiert, deren Feststoffe wie folgt zusammengesetzt waren:
70 Gewichtsteile Farbstoff aus EP-B 0 970 148, Beispiel 2.18,
30 Gewichtsteile Acid Brown 75 (Eisenkomplex), Colour Index 1.7.16

Weitere 60 min später wurde 10% erfindungsgemäße Emulsion EM.8 oder EM.9 bzw. EM.10 dosiert.

Man walkte 60 Minuten. Danach wurden weitere 100% Wasser mit einer Temperatur von 60°C hinzudosiert. Abschließend wurde mit HCOOH in 4 Schritten auf einen pH-Wert von ca. 3,7 abgesäuert. Man ließ die Flotte ab und wusch mit 300% Wasser. Danach wurde in einer frischen Flotte von 150% mit 4% alkalifreiem Chromgerbstoff, Basizität 40, fixiert. Die Walkzeit betrug 90 min, der pH-Wert 3,4 und die Temperatur 40°C. Anschließend wurde zweimal mit je 300% Wasser (25°C) gewaschen. Die Leder wurden über Nacht gelagert, dann ausgereckt, vakuumgetrocknet, konditioniert und gestollt.

Die Ergebnisse sind zusammen mit den ledertechnischen Beurteilungen in Tabelle 5 zusammengestellt.

**Tabelle 5: Eigenschaften der Leder L.17 bis L.19**

| Leder | Weichheit | Fülle | Maeser [Flexe] | Statische Wasseraufnahme [%] |
|---|---|---|---|---|
| L.17 | 1 | 2 | 5000 | 21 |
| L.18 | 1 | 2 | 8000 | 17 |
| L.19 | 1,5 | 2 | 5000 | 23 |
| L.20 | 1,5 | 3 | 5300 | 20 |

Man erhielt ausgezeichnete weiche hydrophobierte Leder, die sehr festnarbig waren und sich sehr gut für weiche Oberleder (Nappa, Floater) eigneten, weiterhin für Bekleidungsstücke, insbesondere Handschuhe, und für Möbelteile, insbesondere Sessel und Sofas.

Man stellte fest, dass die erfindungsgemäßen Leder sich nicht "fettschwer" anfühlten.

### III. Verwendung von erfindungsgemäßen Copolymeren als Emulgatoren

### III.1 Herstellung von Silikonemulsionen

Die in Tabelle 1 aufgeführten Copolymere (A.1) bis (A.3) wurden in Form ihrer wässrigen Dispersionen nach Beispiel I.1 bis I.3 zum Emulgieren eines Polysiloxans der Formel eingesetzt 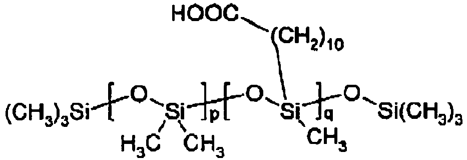 (statistisches Cokondensat mit q = 3 und p = 145, jeweils Durchschnittswerte), kinematische Viskosität 600 mm²/s bel 20°C. Hierzu wurden in jeweils in einem Becherglas je 250 g der erfindungsgemäßen Copolymere (A.1) bis (A.3) als wässrige Lösung vorgelegt und bei 40°C mit 70 g des vorstehend genannten Polysiloxans mit einem Ultraturrax voremulglert.

Anschließend gab man noch jeweils 5 g (1,6 Ges.-%) N-Oleylsarkosid zu und homogenisierte bei 60°C per Ultraturrax und stellt den pH-Wert mit NaOH auf 7,5 bis 8,5 ein. Man erhielt die Emulsionen (Em.1) bis (Em.3), welche bei 40°C einem Lagertest unterzogen wurden. Im Vergleich zu einer wässrigen Emulsion unter Zusatz von 7,5 Gew.-% N-Oleylsarkosid und 5 Gew.-% n-C₁₈H₃₇-(OCH₂CH₂)₅₀OH erhöhte sich die Lagerstabilität bis zum Eintreten einer sichtbaren Aufrahmung (Phasentrennung) um den Faktor 7 bis 20 auf bis zu 12 Monate.

### III.2. Herstellung von Wachsdispersionen

In einem Rührkessel legte man 500 g erfindungsgemäßes Copolymer (A.2) vor. Bei 60°C rührte man in drei Portionen insgesamt 80 g geschmolzenes Carnaubawachs (80°C) ein. Als Cotensid setzte man noch 1 Gew.-% N-Oleylsarkosid zu. Innerhalb von 30 Minuten wurde auf 30°C unter gleichmäßigem Rühren (200 UPM) abgekühlt. Man erhielt die lagerstabile erfindungsgemäße Emulsion (Em.4)

Erfindungsgemäße Emulsion (Em.5): in einem Rührkessel legte man 500 g erfindungsgemäßes Copolymer (A.3) vor. Bei 50°C rührte man mittels eines zweiblätttrigen Ankerrührers (200 UPM) 90 g Weißöl (kommerziell erhältlich als Tudalen® 3036) und 5 g n-C₁₈H₃₇-(OCH₂CH₂)₅₀OH ein.

Die erfindungsgemäßen Emulsionen (Em.4) und (Em.5) konnten für sich und bevorzugt im Mischungsverhältnis (Em.4) zu (Em.5) 10/1 bis 3/1 (Volumenverhältnis) als Leder pflegemittel und als Pullup-Öl verwendet werden.

Erfindungsgemäße Emulsion (Em.5) konnte als Grundkomponente zur Formulierung von Schneid- und Kühlflüssigkeiten für die Metallverarbeitung dienen. Hierbei wirkt sich insbesondere die anti-korrosive Wirkung des erfindungemäßen Copolymers (A3) vorteilhaft aus.

## Patentansprüche

1. Wässrige Formulierung, enthaltend mindestens ein Copolymer, das erhältlich ist durch Copolymerisation von folgenden Comonomeren:
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem (Meth)acrylat eines α-verzweigten C₃-C₁₀-Alkanols,
(c) mindestens einem (Meth)acrylat eines primären β- oder y-verzweigten C₄-C₂₀-Alkanols.

2. Copolymer, erhältlich durch Copolymerisation von folgenden Comonomeren:
(a) mindestens einer ethylenisch ungesättigten C₃-C₁₀-Carbonsäure oder mindestens einer ethylenisch ungesättigten C₄-C₁₀-Dicarbonsäure oder ihrem Anhydrid,
(b) mindestens einem Methacrylat eines α-verzweigten C₃-C₁₀-Alkanols,
(c) mindestens einem Acrylat eines primären β- oder y-verzweigten C₄-C₂₀-Alkanols.

3. Copolymer nach Anspruch 2, **dadurch gekennzeichnet, dass** es sich bei mindestens einem Comonomer (b) um ein Methacrylat eines tertiären C₄-C₁₀-Alkanols handelt.

4. Copolymer nach Anspruch 2 oder 3, **dadurch gekennzeichnet, dass** es erhältlich ist durch Copolymerisation von
(a) 5 bis 30 Gew.-% einer ethylenisch ungesättigten C₃-C₁₀-Carbonsäure oder mindestens einer ethylenisch ungesättigten C₄-C₁₀-Dicarbonsäure oder ihrem Anhydrid,
(b) 5 bis 30 Gew.-% Methacrylat eines α-verzweigten C₃-C₁₀-Alkanols,
(c) 40 bis 90 Gew.-% Acrylat eines primären β- oder y-verzweigten C₄-C₂₀-Alkanols.

5. Copolymer nach einem der Ansprüche 2 bis 4, **dadurch gekennzeichnet, dass** es sich um ein statistisches Copolymer handelt.

6. Copolymer nach einem der Ansprüche 2 bis 5, **dadurch gekennzeichnet, dass** einpolymerisierte ethylenisch ungesättigte C₃-C₁₀-Carbonsäure (a) bzw. einpolymerisierte ethylenisch ungesättigte C₄-C₁₀-Dicarbonsäure (a) in zumindest partiell neutralisierter Form vorliegt.

7. Copolymer nach einem der Ansprüche 2 bis 6, **dadurch gekennzeichnet, dass** einpolymerisiertes Anhydrid von ethylenisch ungesättigter C₄-C₁₀-Dicarbonsäure (a) in zumindest partiell hydrolysierter und gegebenenfalls zumindest partiell neutralisierter Form vorliegt.

8. Verfahren zur Herstellung von Copolymeren nach einem der Ansprüche 2 bis 7, **dadurch gekennzeichnet, dass** man miteinander radikalisch polymerisiert:
(a) mindestens eine ethylenisch ungesättigte C₃-C₁₀-Carbonsäure oder mindestens eine ethylenisch ungesättigte C₄-C₁₀-Dicarbonsäure oder ihr Anhydrid,
(b) mindestens ein Methacrylat eines α-verzweigten C₃-C₁₀-Alkanols,
(c) mindestens ein Acrylat eines primären β- oder γ-verzweigten C₄-C₂₀-Alkanols.

9. Wässrige Formulierung nach Anspruch 1, enthaltend zusätzlich mindestens eine Silikonverbindung (B).

10. Wässrige Formulierung nach Anspruch 1 oder 9, enthaltend zusätzlich mindestens einen Emulgator (C).

11. Wässrige Formulierung nach Anspruch 10, **dadurch gekennzeichnet, dass** es sich bei Emulgator (C) um das Phosphat eines alkoxylierten Alkanols handelt.

12. Verwendung von Copolymeren nach einem der Ansprüche 2 bis 7 zur Herstellung von Leder.

13. Verwendung von wässrigen Formulierungen nach Anspruch 1, 9 oder 10 zur Herstellung von Leder.

## Claims

1. An aqueous formulation comprising at least one copolymer which is obtainable by copolymerization of the following comonomers:
(a) at least one ethylenically unsaturated C₃-C₁₀-carboxylic acid or at least one ethylenically unsaturated C₄-C₁₀-dicarboxylic acid or its anhydride,
(b) at least one (meth)acrylate of an α-branched C₃-C₁₀-alkanol,
(c) at least one (meth)acrylate of a primary β- or γ-branched C₄-C₂₀-alkanol.

2. A copolymer obtainable by copolymerization of the following comonomers:
(a) at least one ethylenically unsaturated C₃-C₁₀-carboxylic acid or at least one ethylenically unsaturated C₄-C₁₀-dicarboxylic acid or its anhydride,
(b) at least one methacrylate of an α-branched C₃-C₁₀-alkanol,
(c) at least one acrylate of a primary β- or γ-branched C₄-C₂₀-alkanol.

3. The copolymer according to claim 2, wherein at least one comonomer (b) is a methacrylate of a tertiary C₄-C₁₀-alkanol.

4. The copolymer according to claim 2 or 3, which is obtainable by copolymerization of
(a) from 5 to 30% by weight of an ethylenically unsaturated C₃-C₁₀-carboxylic acid or at least one ethylenically unsaturated C₄-C₁₀-dicarboxylic acid or its anhydride,
(b) from 5 to 30% by weight of a methacrylate of an α-branched C₃-C₁₀-alkanol,
(c) from 40 to 90% by weight of an acrylate of a primary β- or γ-branched C₄-C₂₀-alkanol.

5. The copolymer according to any of claims 2 to 4, which is a random copolymer.

6. The copolymer according to any of claims 2 to 5, wherein ethylenically unsaturated C₃-C₁₀-carboxylic acid (a) incorporated in the form of polymerized units or ethylenically unsaturated C₄-C₁₀-dicarboxylic acid (a) incorporated in the form of polymerized units is present in at least partly neutralized form.

7. The copolymer according to any of claims 2 to 6, wherein the anhydride of ethylenically unsaturated C₄-C₁₀-dicarboxylic acid (a) which is incorporated in the form of polymerized units is present in at least partly hydrolyzed and, if appropriate, at least partly neutralized form.

8. A process for the preparation of copolymers according to any of claims 2 to 7, wherein the following are subjected to free radical polymerization with one another:
(a) at least one ethylenically unsaturated C₃-C₁₀-carboxylic acid or at least one ethylenically unsaturated C₄-C₁₀-dicarboxylic acid or its anhydride,
(b) at least one methacrylate of an α-branched C₃-C₁₀-alkanol,
(c) at least one acrylate of a primary β- or γ-branched C₄-C₂₀-alkanol.

9. The aqueous formulation according to claim 1, additionally comprising at least one silicone compound (B).

10. The aqueous formulation according to claim 1 or 9, additionally comprising at least one emulsifier (C).

11. The aqueous formulation according to claim 10,
wherein emulsifier (C) is the phosphate of an alkoxylated alkanol.

12. The use of copolymers according to any of claims 2 to 7 for the production of leather.

13. The use of aqueous formulations according to claim 1, 9 or 10 for the production of leather.

## Revendications

1. Composition aqueuse, contenant au moins un copolymère qui peut être obtenu par copolymérisation des comonomères suivants :
(a) au moins un acide carboxylique en C₃-C₁₀ à insaturation éthylénique ou au moins un acide dicarboxylique en C₄-C₁₀ à insaturation éthylénique ou son anhydride,
(b) au moins un (méth)acrylate d'un alcanol en C₃-C₁₀ α-ramifié,
(c) au moins un (méth)acrylate d'un alcanol en C₄-C₂₀ β- ou γ-ramifié primaire.

2. Copolymère, pouvant être obtenu par copolymérisation des comonomères suivants :
(a) au moins un acide carboxylique en C₃-C₁₀ à insaturation éthylénique ou au moins un acide dicarboxylique en C₄-C₁₀ à insaturation éthylénique ou son anhydride,
(b) au moins un méthacrylate d'un alcanol en C₃-C₁₀ α-ramifié,
(c) au moins un acrylate d'un alcanol en C₄-C₂₀ β- ou γ-ramifié primaire.

3. Copolymère selon la revendication 2, **caractérisé en ce que** ledit au moins un comonomère (b) consiste en un méthacrylate d'un alcanol en C₄-C₁₀ tertiaire.

4. Copolymère selon la revendication 2 ou 3, **caractérisé en ce qu'**il peut être obtenu par copolymérisation de
(a) 5 à 30 % en poids d'un acide carboxylique en C₃-C₁₀ à insaturation éthylénique ou d'au moins un acide dicarboxylique en C₄-C₁₀ à insaturation éthylénique ou son anhydride,
(b) 5 à 30 % en poids de méthacrylate d'un alcanol en C₃-C₁₀ α-ramifié,
(c) 40 à 90 % en poids d'acrylate d'un alcanol en C₄-C₂₀ β- ou γ-ramifié primaire.

5. Copolymère selon l'une quelconque des revendications 2 à 4, **caractérisé en ce qu'**il s'agit d'un copolymère statistique.

6. Copolymère selon l'une quelconque des revendications 2 à 5, **caractérisé en ce que** l'acide carboxylique en C₃-C₁₀ à insaturation éthylénique (a) incorporé par polymérisation ou l'acide dicarboxylique en C₄-C₁₀ à insaturation éthylénique (a) incorporé par polymérisation se trouve sous forme au moins partiellement neutralisée.

7. Copolymère selon l'une quelconque des revendications 2 à 6, **caractérisé en ce que** l'anhydride d'acide dicarboxylique en C₄-C₁₀ à insaturation éthylénique (a) incorporé par polymérisation se trouve sous forme au moins partiellement hydrolysée et éventuellement au moins partiellement neutralisée.

8. Procédé pour la préparation de copolymères selon l'une quelconque des revendications 2 à 7, **caractérisé en ce qu'**on polymérise entre eux par voie radicalaire :
(a) au moins un acide carboxylique en C₃-C₁₀ à insaturation éthylénique ou au moins un acide dicarboxylique en C₄-C₁₀ à insaturation éthylénique ou son anhydride,
(b) au moins un méthacrylate d'un alcanol en C₃-C₁₀ α-ramifié,
(c) au moins un acrylate d'un alcanol en C₄-C₂₀ β- ou γ-ramifié primaire.

9. Composition aqueuse selon la revendication 1, contenant en outre au moins un composé silicone (B),

10. Composition aqueuse selon la revendication 1 ou 9, contenant en outre au moins un émulsifiant (C).

11. Composition aqueuse selon la revendication 10, **caractérisée en ce que** l'émulsifiant (C) consiste en le phosphate d'un alcanol alcoxylé.

12. Utilisation de copolymères selon l'une quelconque des revendications 2 à 7, dans la fabrication du cuir.

13. Utilisation de compositions aqueuses selon la revendication 1, 9 ou 10, dans la fabrication du cuir.
